(19) Europäisches Patentamt
European Patent Office
Office européen des brevets

(11) **EP 4 794 279 A1**

(12) **EUROPEAN PATENT APPLICATION**
published in accordance with Art. 153(4) EPC

(43) Date of publication:
**19.08.2026 Bulletin 2026/34**

(21) Application number: **24877568.6**

(22) Date of filing: **11.10.2024**

(51) International Patent Classification (IPC):
***H04L 27/26*** *(2006.01)*

(52) Cooperative Patent Classification (CPC):
**H04L 27/26**

(86) International application number:
**PCT/KR2024/015435**

(87) International publication number:
**WO 2025/080033 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.10.2023 KR 20230136247**

(71) Applicant: **SOLiD, Inc.**
**Gyeonggi-do 13493 (KR)**

(72) Inventor: **HONG, Hoony**
**Seoul 06361 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **METHOD AND APPARATUS FOR SUPPORTING USE OF MIXED NUMEROLOGIES IN COMMUNICATION SYSTEM**

(57) According to an embodiment of the present disclosure, a method performed by an O-DU in a communication system includes: receiving capability information for an O-RU from the O-RU; determining whether to allocate communication resources to the O-RU using a plurality of SCSs and allocating a plurality of carriers using different SCSs for the communication resource, based on the capability information; generating configuration information for the O-RU based on the capability information and information about the allocated plurality of carriers; and transmitting the generated configuration information to the O-RU, wherein the configuration information may include a center frequency offset for each of the plurality of carriers configured with the different SCSs.

FIG. 6

610
620
O-DU (SMO)
O-RU
Retreival of O-RU information
S601
Carrier Decision
Endpoint Configuration Choice
S602
U-plane-configuration
S603

EP 4 794 279 A1

## Description

TECHNICAL FIELD

The present disclosure relates to a method and an apparatus for supporting the use of mixed numerologies in a communication system.

BACKGROUND ART

As wireless communication systems develop and evolve into 4th generation (4G) communication systems, 5th generation (5G) communication systems, etc., various functions and specifications are required. In order to satisfy these functions and specifications, various methods have been introduced, and one of them is a method of implementing a network infrastructure structure by functionally splitting it. A representative configuration of the functional split method is that a base station can be represented as a centralized unit (CU), a distributed unit (DU), and a radio unit (RU) according to its function, and interfaces of respective units are defined by organizations such as 3GPP and the O-RAN (open-radio access network) alliance.

DESCRIPTION OF EMBODIMENTS

TECHNICAL PROBLEM

One problem to be solved by the present disclosure is to provide a method for efficiently utilizing communication in a fronthaul or increasing processing capacity in O-RAN communication.

Another problem to be solved by the present disclosure is to provide a method for saving resources and costs and increasing communication quality by utilizing mixed numerologies when performing communication in a fronthaul.

SOLUTION TO PROBLEM

According to an embodiment of the present disclosure, a method performed by a controller in a communication system includes: receiving capability information for an O-RU from the O-RU; determining whether to allocate communication resources to the O-RU using a plurality of SCSs and allocating a plurality of carriers using different SCSs for the communication resources, based on the capability information; generating configuration information for the O-RU based on the capability information and information about the allocated plurality of carriers; and transmitting the generated configuration information to the O-RU, wherein the configuration information may include a center frequency offset for each of the plurality of carriers configured with the different SCSs.

According to an embodiment, the center frequency offset may indicate an offset value from a center of a channel bandwidth of the communication resource to a center of a first resource element of a first resource block of each of the plurality of carriers.

According to an embodiment, the capability information may include mixed numerology capability information indicating whether the O-RU can use resources allocated using a plurality of SCSs, and the capability information may further include section type information and frame structure information supported by the O-RU.

According to an embodiment, the allocating of the plurality of carriers using the different SCSs for the communication resource may include: allocating the same extended antenna-carrier (eAxC) ID to each of the plurality of carriers; and determining a section type for at least one carrier among the plurality of carriers as section type 3.

According to an embodiment, the generating of the configuration information may include: determining a center of a channel bandwidth for the communication resource; determining a center frequency offset of at least one carrier configured with the section type 3 based on the center of the channel bandwidth; and generating the configuration information based on the center frequency offset of the at least one carrier configured with the section type 3.

According to another aspect of the present disclosure, a method performed by an O-RU includes: receiving configuration information from an O-DU; identifying a plurality of carriers configured with different SCSs based on the received configuration information; and determining a wireless communication resource based on the plurality of carriers, wherein the configuration information may include a center frequency offset for each of the plurality of carriers.

According to an embodiment, the configuration information is received through a management plane (M-plane) message configured as a YANG module, and the center frequency offset may be included in a list indicating the number of resource blocks for each of the plurality of carriers in the YANG module.

According to another aspect of the present disclosure, an O-DU includes: a transceiver; a memory; and a processor connected to the transceiver and the memory, wherein the processor is configured to: receive capability information for an O-RU from the O-RU, determine whether to allocate communication resources to the O-RU using a

plurality of SCSs and allocate a plurality of carriers using different SCSs for the communication resource, based on the capability information, generate configuration information for the O-RU based on the capability information and information about the allocated plurality of carriers, and transmit the generated configuration information to the O-RU, and wherein the configuration information may include a center frequency offset for each of the plurality of carriers configured with the different SCSs.

ADVANTAGEOUS EFFECTS OF DISCLOSURE

According to an embodiment of the present disclosure, when an O-RU uses mixed numerologies in fronthaul communication, communication can be performed efficiently or resources can be saved by transmitting specific configuration information on a management plane.

The technical effects of the present disclosure are not limited to the effects described above, and other effects not described herein may be clearly understood by one of ordinary skill in the art from the following description.

BRIEF DESCRIPTION OF DRAWINGS

FIG. 1A is a view of a wireless communication system according to various embodiments of the present disclosure.
FIG. 1B is a view illustrating an example of a fronthaul structure according to a functional split of a base station, according to various embodiments of the present disclosure.
FIG. 2 is a view of an O-RAN network system according to an embodiment of the present disclosure.
FIG. 3 is a view of a structure of an O-RAN wireless communication system according to an embodiment of the present disclosure.
FIG. 4 is a view of a structure of an Ethernet message according to an embodiment of the present disclosure.
FIGS. 5A and 5B are views illustrating an example of a C-plane message according to an embodiment of the present disclosure.
FIG. 6 is a view illustrating an example of signaling between an O-DU and an O-RU for using mixed numerologies in a fronthaul according to an embodiment of the present disclosure.
FIG. 7 is a view illustrating a Yang module showing O-RU information delivered to an O-DU according to an embodiment of the present disclosure.
FIG. 8 is a view illustrating an example of allocating a carrier to a channel bandwidth when using mixed numerologies according to an embodiment of the present disclosure.
FIG. 9 is a view illustrating a Yang module for a U-plane configuration according to an embodiment of the present disclosure.
FIG. 10 is a view schematically illustrating an example of a carrier structure using mixed numerologies based on the U-plane configuration of FIG. 9, according to an embodiment of the present disclosure.
FIG. 11 is a view illustrating a Yang module for a modified U-plane configuration according to various embodiments of the present disclosure.
FIGS. 12A and 12B are views schematically illustrating various examples of a carrier structure using mixed numerologies based on the U-plane configuration of FIG. 11, according to an embodiment of the present disclosure.
FIG. 13 is a view of a configuration of an O-DU according to an embodiment of the present disclosure.
FIG. 14 is a view of a configuration of an O-RU according to an embodiment of the present disclosure.
FIG. 15 is a view of a configuration of a controller according to an embodiment of the present disclosure.
FIG. 16 is a flowchart illustrating an operation of an O-DU for performing communication utilizing mixed numerologies according to an embodiment of the present disclosure.

MODE OF DISCLOSURE

Hereinafter, embodiments of the disclosure will be described in detail with the accompanying drawings.

In the description of the embodiments of the disclosure, certain detailed explanations of a related function or configuration are omitted when it is deemed that they may unnecessarily obscure the essence of the disclosure. In addition, the terms described below are defined in consideration of the functions in the disclosure, and may vary depending on the intention or custom of a user or an operator. Therefore, the definition needs to be made based on content throughout this specification.

For the same reason, some components may be exaggerated, omitted, or schematically shown in the accompanying drawings. In addition, the size of each component does not entirely reflect its actual size. In each drawing, identical or corresponding components are given the same reference numerals.

Advantages and features of the disclosure, and implementation methods thereof will be clarified through following embodiments described with reference to the accompanying drawings. However, the disclosure is not limited to the embodiments disclosed below, but may be implemented in various different forms. The embodiments are provided only to ensure that the description of the disclosure is complete and to fully inform one of ordinary skill in the art of the scope of the disclosure to which the embodiments of the disclosure pertain, and the claimed scope of the disclosure is only defined by the scope of the claims.

At this time, it will be understood that each block of processing flowcharts and combinations of the processing flowcharts may be performed by computer program instructions. Because these computer program instructions may be mounted on a processor of a general-purpose computer, special-purpose computer, or other programmable data processing equipment, the instructions performed through the processor of the computer or other programmable data processing device creates a unit to perform functions described in flow chart block(s). These computer program instructions may also be stored in computer-usable or computer-readable memory that can be directed to a computer or other programmable data processing equipment to implement the functions in a particular manner. Accordingly, the instructions stored in the computer-usable or computer-readable memory may also produce manufactured items containing an instruction unit that performs the functions described in the flow chart block(s). Because the computer program instructions can be mounted on a computer or other programmable data processing equipment, instructions that execute a computer or other programmable data processing equipment by performing a series of operations on a computer or other programmable data processing equipment to generate a computer-executable process may also provide operations for executing the functions described in the flow chart block(s).

In addition, each block may represent a module, segment, or portion of code containing one or more executable instructions for executing specified logical function(s). In addition, in some alternative implementations, it should be noted that functions mentioned in the blocks may occur out of order. For example, two blocks shown in succession may be performed substantially simultaneously, or the blocks may sometimes be performed in reverse order depending on their corresponding functions.

The term "unit or part" used in the disclosure refers to software or hardware components such as a field-programmable gate array (FPGA) or an application specific integrated circuit (ASIC), and the "unit or part" may be configured to perform specific roles. However, the "unit or part" is not limited to software or hardware. The "unit or part" may be configured to be stored in an addressable storage medium or to execute one or more processors. Accordingly, for example, the "unit or part" may include components such as software components, object-oriented software components, class components and task components, processors, functions, attributes, procedures, subroutines, segments of program codes, drivers, firmware, micro codes, circuits, data, database, data structures, tables, arrays and variables. Functions provided in components and "units or parts" may be combined into a smaller number of components and "units or parts", or may be further divided into additional components and "units or parts." Furthermore, components and "units or parts" may be implemented to reproduce one or more CPUs within a device or a secure multimedia card. In addition, in an embodiment, "unit or part" may include one or more processors and/or devices.

In various embodiments, the technologies described in the disclosure and systems and devices for implementation thereof may utilize other radio access technologies such as WiFi or WiMax as well as radio access technologies such as code division multiple access (CDMA), time division multiple access (TDMA), frequency division multiple access (FDMA), orthogonal FDMA (OFDMA), single-carrier FDMA (SC-FDMA), LTE, GSM, and 5G NR to support communication between networks (or systems).

Various other embodiments and features according to the inventive concept of the disclosure will be further described later below. It should be apparent that the teachings herein may be implemented in a wide variety of forms and any particular structure, function, or both, disclosed herein are merely exemplary, and not limiting. Based on the teachings herein, those of ordinary skill in the art will appreciate that aspects disclosed herein may be implemented independently of any other aspects, and two or more of these aspects may be combined in various ways. For example, a device or a method may be implemented by using any number of aspects set forth herein. Furthermore, the device or the method may be implemented with structures and functions of one or more of the aspects described herein, or may be implemented by using structures and functions of other aspects. For example, the method may be implemented as a part of commands stored on a computer-readable medium for execution on a system, a device, an apparatus and/or a processor, or a computer. Furthermore, one aspect may include at least one component of the claim.

Hereinafter, preferred embodiments of the disclosure will be described in detail with reference to the accompanying drawings. At this time, it should be noted that the same components in the attached drawings are indicated by the same symbols as much as possible. In addition, detailed descriptions of well-known functions and configurations that may obscure the gist of the disclosure will be omitted.

In describing the embodiments in this specification, descriptions of technical content that is well-known in the art and not directly related to the disclosure will be omitted. This is to convey the gist of the disclosure more clearly without obscuring it by omitting unnecessary explanation.

For the same reason, some components are exaggerated, omitted, or schematically shown in the accompanying

drawings. In addition, the size of each component does not entirely reflect its actual size. In each drawing, identical or corresponding components are given the same reference numerals.

Advantages and features of the disclosure, and implementation methods thereof will be clarified through following embodiments described with reference to the accompanying drawings. However, the disclosure is not limited to the embodiments disclosed below, but may be implemented in various different forms. The embodiments are provided to ensure that the description of the disclosure is complete and to fully inform one of ordinary skill in the art of the scope of the disclosure, and the disclosure is only defined by the scope of the claims. Like reference numerals refer to like elements throughout.

At this time, it will be understood that each block of processing flow charts and combinations of the processing flow charts may be performed by computer program instructions. Because these computer program instructions may be mounted on a processor of a general-purpose computer, special-purpose computer, or other programmable data processing equipment, the instructions performed through the processor of the computer or other programmable data processing device creates a unit to perform functions described in flow chart block(s). These computer program instructions may also be stored in computer-usable or computer-readable memory that can be directed to a computer or other programmable data processing equipment to implement the functions in a particular manner. Accordingly, the instructions stored in the computer-usable or computer-readable memory may also produce manufactured items containing an instruction unit that performs the functions described in the flow chart block(s). Because the computer program instructions can be mounted on a computer or other programmable data processing equipment, instructions that execute a computer or other programmable data processing equipment by performing a series of operations on a computer or other programmable data processing equipment to generate a computer-executable process may also provide operations for executing the functions described in the flow chart block(s).

In addition, each block may represent a module, segment, or portion of code containing one or more executable instructions for executing specified logical function(s). In addition, in some alternative implementations, it should be noted that functions mentioned in the blocks may occur out of order. For example, two blocks shown in succession may be performed substantially simultaneously, or the blocks may sometimes be performed in reverse order depending on their corresponding functions.

At this time, the term "unit or part" used in the present embodiment means software or hardware components such as FPGA and ASIC, and the "unit or part" performs a particular function. However, the "unit or part" is not limited to software or hardware. The "unit or part" may be configured to be stored in an addressable storage medium or to play back one or more processors. Accordingly, the "unit or part" may include, for example, software components, object-oriented software components, components such as class components and task components, processors, functions, attributes, procedures, subroutines, segments of program codes, drivers, firmware, micro codes, circuits, data, database, data structures, tables, arrays and variables. Functions provided in components and "units or parts" may be combined into a smaller number of components and "units or parts", or may be further divided into additional components and "units or parts." Furthermore, components and "units or parts" may be implemented to reproduce one or more CPUs within a device or a secure multimedia card.

Hereinafter, a base station is an entity that performs resource allocation for a terminal and may be at least one of a Node B, BS (Base Station), eNB (eNode B), gNB (gNode B), a radio access unit, a base station control device, or a node on a network. The terminal may include UE (User Equipment), MS (Mobile Station), a cellular phone, a smartphone, a computer, or a multimedia system capable of performing communication functions. In addition, the embodiment of the disclosure described below may be applied to other communication systems having a similar technical background or channel type as the embodiment of the disclosure. In addition, the embodiment of the disclosure may be applied to other communication systems through some modifications without significantly departing from the scope of the disclosure, at the discretion of one of ordinary skill in the art.

Terms used in the following description, such as terms for identifying an access node, terms referring to network entities or NF(network function)s, terms referring to messages, terms referring to interfaces between network objects, and terms referring to various identification information, are provided as examples for convenience of explanation. Therefore, the disclosure is not limited to the terms described below, and other terms referring to objects having equivalent technical meaning may be used.

For convenience of explanation below, some terms and names defined in 3rd generation partnership project (3GPP) long-term evolution (LTE), Internet engineering task force (IETF) and IEEE 802 Project standards may be used. However, the disclosure is not limited by the above terms and names, and may be equally applied to systems according to other standards.

Hereinafter, various embodiments according to the inventive concept of the disclosure will be described in detail one by one.

An O-DU (O-RAN Distributed Unit) may be a part of an O-RAN system, which is generally implemented in software. In more detail, the O-DU may be a logical node hosting an RLC/MAC High-PHY layer based on a lower layer functional split.

An O-RU (O-RAN radio unit) may be a logical node that performs RF processing and hosts a Low-PHY layer based on a lower layer functional split. The O-RU may perform the role of transmitting and receiving radio signals, which is the biggest feature of 3GPP's "TRP" or "RRH".

User Equipment (UE) is a device, such as a mobile phone, that allows a user to access a network service.

An uplink (UL) refers to a traffic flow through different network components from the UE to a network and from the O-RU to the O-DU. An interface from the UE to the O-RU is wireless, while a UL traffic from the O-RU to the O-DU may take various forms (e.g., Ethernet connection) such as wireless and wired.

A downlink (DL) refers to a traffic flow through network components from the O-DU to the O-RU and from the network to the UE. A fronthaul interface from the O-DU to the O-RU may have various forms (e.g., Ethernet) such as wired or wireless, while an interface from the O-RU to the UE may be a wireless interface.

The O-RAN specification may include four planes: user plane (U-plane), control plane (C-plane), synchronization plane (S-plane), and management plane (M-plane).

The user plane (U-plane) may be a concept that includes IQ sample data transmitted between the O-DU and the O-RU.

The control plane (C-plane) is a concept that specifically refers to scheduling information, beamforming information transfer, and other real-time control between the O-DU and the O-RU, and may be distinguished from a UE's control plane.

The synchronization plane (S-plane) generally includes time and frequency synchronization configuration and information exchange, and may include other network elements in addition to the O-DU and the O-RU.

The M-plane is a concept that represents a non-real-time management operation for the O-RU. The non-real-time management operation may be executed bidirectionally by O-RU and O-RU controllers, and the O-RU controller may reside in the O-DU or a service management and orchestration system (SMO), or may exist as a separate device.

An M-plane interface is a link between the O-RU controller and the O-RU to exchange non-real-time management information.

The section type is a delimiter of a C-plane message format and consists of different data fields depending on the purpose, such as scheduling format, beamforming information configuration format, ACK/NACK instruction response, and LAA information exchange.

Section extension data is optional additional information attached to the end of section data in a C-plane message that mainly flows

from the O-DU to the O-RU, and may transmit additional real-time control information to support objectives that cannot be achieved in a normal configuration format or to achieve optimization.

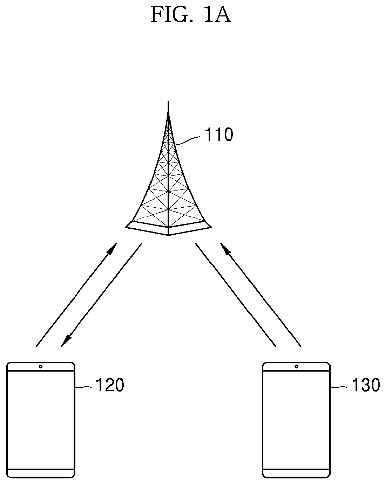

FIG. 1A is a view of a wireless communication system according to various embodiments of the present disclosure. FIG. 1A illustrates a base station 110, a first terminal 120, and a second terminal 130 as some of nodes that use a wireless channel in the wireless communication system. FIG. 1A shows only one base station, but other base stations identical or similar to the base station 110 may be further included.

The base station 110 is a network infrastructure that provides radio access to the terminals 120 and 130. The base station 110 has coverage defined as a certain geographic area based on a distance over which signals can be transmitted. The base station 110 may be referred to as "base station", "access point (AP)", "eNodeB (eNB)", "5th generation node", "next generation nodeB (gNB)", "wireless point", "transmission/reception point (TRP)", or other terms with equivalent technical meaning.

Each of the terminals 120 and 130 is a device used by a user and communicates with the base station 110 through a wireless channel. A link from the base station 110 to the first terminal 120 or the second terminal 130 is called a downlink (DL), and a link from the first terminal 120 or the second terminal 130 to the base station 110 is called an uplink (UL). In addition, the first terminal 120 and the second terminal 130 may communicate with each other through a wireless channel. In some cases, at least one of the first terminal 120 and the second terminal 130 may be operated without user involvement. In other words, at least one of the first terminal 120 and the second terminal 130 is a device that performs machine type communication (MTC) and may not be carried by a user. Each of the first terminal 120 and the second terminal 130 may be referred to as "terminal", "user equipment (UE)", "customer premises equipment (CPE)", "mobile station", "subscriber station", "remote terminal", "wireless terminal", "electronic device", "user device", or other terms having equivalent technical meaning.

Conventionally, in a communication system with a relatively large cell radius of base stations, each base station is installed to include functions of a digital processing unit (or digital unit (DU)) and a radio frequency (RF) processing unit (or radio unit (RU)). However, as higher frequency bands are used in 4th generation (4G) and/or later communication systems and the cell radius of base stations becomes smaller, the number of base stations to cover a specific area increases, and an installation cost burden on an operator to install the increased number of base stations increases. In order to minimize an installation cost of a base station, a structure has been proposed in which a DU and an RU of a base station are split, one or more RUs are connected to one DU through a wired network, and one or more geographically distributed RUs are deployed to cover a specific area.

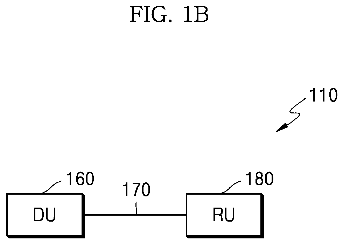

FIG. 1B is a view illustrating an example of a fronthaul structure according to a functional split of a base station, according to various embodiments. A fronthaul refers to a link between entities between a wireless LAN and the base station, unlike a backhaul between the base station and a core network.

Referring to FIG. 1B, the base station 110 may include a DU 160 and an RU 180. A fronthaul 170 between the DU 160 and the RU 180 may be operated through an Fx interface. For operation of the fronthaul 170, for example, an interface such as enhanced common public radio interface (eCPRI) or radio over ethernet (ROE) may be used.

As communication technology develops, mobile data traffic increases, and accordingly, a bandwidth requirement for a fronthaul between a DU and an RU increases significantly. In deployment such as a centralized/cloud radio access network (C-RAN), the DU may be implemented to perform functions for packet data convergence protocol (PDCP), radio link control (RLC), media access control (MAC), and physical (PHY), and the RU may be implemented to further perform functions for a PHY layer in addition to a radio frequency (RF) function.

The DU 160 may be responsible for an upper layer function of a wireless network. For example, the DU 160 may perform a function of an MAC layer and a portion of the PHY layer. Here, a portion of the PHY layer is performed at a higher level from among the functions of the PHY layer and may include, for example, channel encoding (or channel decoding), scrambling (or descrambling), modulation (or demodulation), or layer mapping (or layer demapping). According to an embodiment, when the DU 160 complies with an O-RAN standard, the DU 160 may be referred to as an O-RAN DU (O-DU). The DU 160 may be represented as a replacement for a first network entity for a base station (e.g., gNB) in embodiments of the disclosure, as needed.

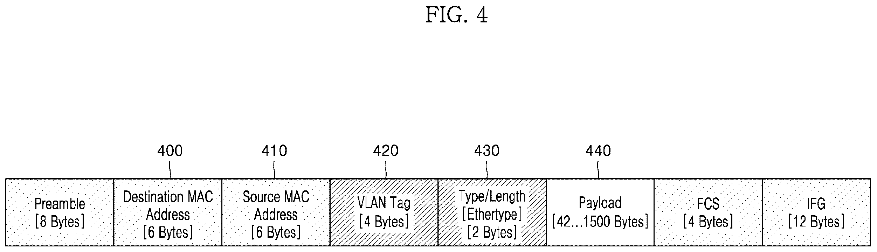

The RU 180 may be responsible for a lower layer function of a wireless network. For example, the RU 180 may perform a portion of the PHY layer and an RF function. Here, a portion of the PHY layer is performed at a relatively lower level than the DU 160 from among the functions of the PHY layer and may include, for example, IFFT conversion (or FFT conversion), CP insertion (CP removal), and digital beamforming. An example of this specific functional split will be described in detail in FIG. 4. The RU 180 may be referred to as "access unit (AU)", "access point (AP)", "transmission/-reception point (TRP)", "remote radio head (RRH)", "radio unit (RU)", or other terms having equivalent technical meaning. According to an embodiment, when the RU 180 complies with an O-RAN standard, the RU 180 may be referred to as an O-RAN RU (O-RU). The DU 180 may be represented as a replacement for a second network entity (e.g., another FHM) for a base station (e.g., gNB) in embodiments of the disclosure, as needed.

In fronthaul communication between the DU 160 and the RU 180, the RU 180 needs to continuously perform radio transmission and reception specified in 3GPP TS within an error range specified for time and frequency resources (e.g. frequency time error, time alignment error, etc.). To this end, timing and latency of the network infrastructure are managed for each network element, and in particular, DU and RU that handle physical layer signal processing require strict timing control and high accuracy. Because functional split option 7 performs signal processing on a per-symbol basis, IQ data corresponding to each symbol and its processing information need to be transferred between the DU 160 and RU 180 before certain latency. A message arrival point in time may have a relationship as shown in the formula below, which is determined by a transmission point in time and delay time.

Transmission point in time (window) + delay time <= arrival point in time (window)
Transmit window + transport delay <= receive window

Usually, there is a DU's fixed timing processing method that secures a sufficient margin for transmission delay based on timing of the RU 180, and a DU's dynamic timing processing method that takes advantage of an additional time secured by varying timing of message transmission and reception for a fronthaul transmission delay. The processing method is determined by the DU 160 because it depends on a message timing management capability of the DU 160. Because it is generally advantageous for the RU 180 to process in the shortest period of time with optimal resources, the RU 180 provides a delay profile according to a certain standard. This standard may be sub-carrier spacing, a bandwidth, a fronthaul (FH) line rate, a buffer depth, a transport flow, etc. Because there are too many parameters between the DU 160 and the RU 180 for delay management of messages, optimization based on consultation between vendors based on use cases is generally expected, rather than a convergence process based on general requirements and relationships. Even if a dynamic timing processing method of the DU 160 is used, this means a dynamic change according to a use case and deployment, and does not mean a dynamic change to a delay that changes dynamically in an already configured cell. It is possible to expand the method to respond semi-statically while accompanied by service deterioration, but there is currently no significant advantage.

O-RAN message timing is managed so that the DU 160 and RU 180 may transmit and receive data smoothly in relation to a transport delay. A UL combining function of a U-plane message for FHM and Cascade O-RU may operate based on ta3-prime-max based on current reference timing tul=0. Ta3-prime-max may be determined by considering Ta4-max and FH transport delay in the DU.

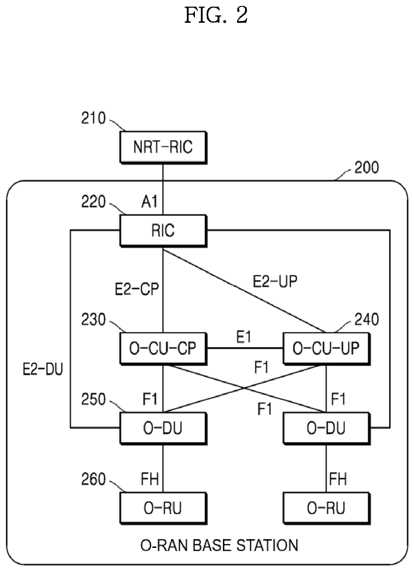

FIG. 2 is a view of an O-RAN network system according to an embodiment. According to FIG. 2, an O-RAN network is a network that logically splits functions of eNB and gNB of existing 4G and 5G systems, and may be defined as a

non-realtime (NRT)-RAN intelligent controller (RIC) 210, an RIC 220 within an O-RAN base station 200, O-CU-CP 230, O-CU-UP 240, O-DU 250, O-RU 260, etc. in an O-RAN related standard. The NRT-RIC 210 is a logical node that enables non-real-time control, optimization of RAN elements and resources, model training and updates, etc. The RIC 220 is a logical node that centrally deploys servers in one physical location and enables near-real-time control and optimization of RAN elements and resources based on data collected from the O-DU 250, the O-CU-CP 230, the O-CU-UP 240, etc. through an E2 interface. The O-CU including the O-CU-CP 230 and the O-CU-UP 240 is a logical node that provides functions of radio resource control (RRC), service data adaptation protocol (SDAP), and packet data convergence protocol (PDCP). The O-CU-CP 230 is a logical node that provides functions of a C-plane portion of the RRC and PDCP, and the O-CU-UP 240 is a logical node that provides functions of a U-plane portion of the SDAP and PDCP. The O-CU-CP 230 may be connected to an access and mobility management function (AMF) included in a 5G network (5G core) and an NGAP interface. The O-DU 250 is a logical node that provides functions of RLC, MAC, and high physical layer (high-PHY), and the O-RU 260 connected to the O-DU 250 is a logical node that provides functions of the lower physical layer and RF processing. In FIG. 2, each logical node is shown as a single logical node, but a plurality of logical nodes are also possible. For example, a plurality of O-RUs 260 may be connected to one O-DU 250, and a plurality of O-DUs 250 may be connected to one O-CU-UP 240.

The disclosure is not limited by the name of each node described above, and the configuration of the disclosure may be applied to any logical node or entity that performs the functions described above. In addition, the logical node may be physically located in the same location or a different location, and its function may be provided by the same physical device (e.g., processor, control unit, etc.) or a different physical device. For example, at least one of the functions of the logical node described above may be provided through virtualization in one physical device. Hereinafter, an O-DU may be expressed interchangeably with a DU, and an O-RU may be expressed interchangeably with an RU.

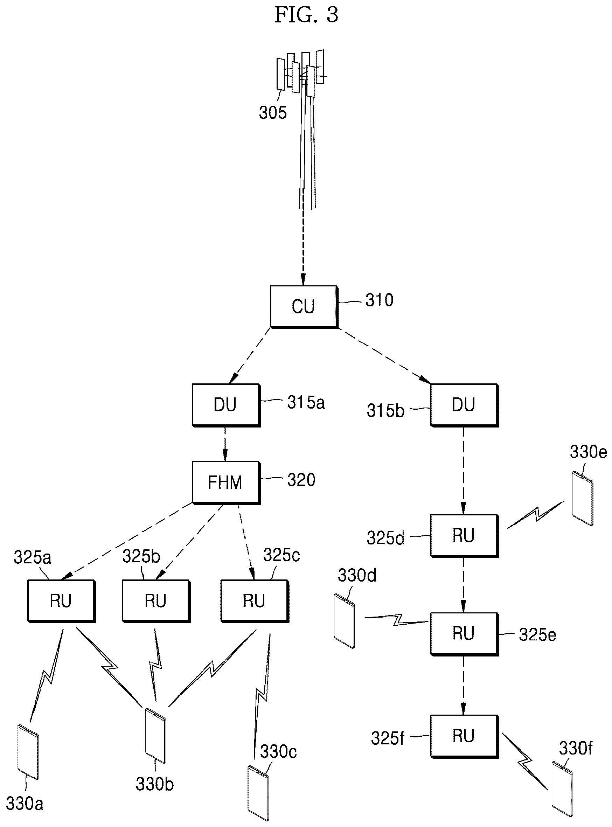

FIG. 3 is a view of a structure of an O-RAN wireless communication system according to an embodiment. The wireless communication system may include a base station 305 and at least one of UEs 330a, 330b, ..., 330f. The base station may include a CU310, at least one of DUs 315a and 315b, an FHM 320, and at least one of RUs 325a, 325b, ..., 325f. The CU, DUs, FHM, and RUs may all be included in a base station or exist as entities with separate functions.

In an embodiment, the wireless communication system may be a radio access network (RAN) such as an open-RAN. The RAN may include connection between UE and a network including a base station. The O-RAN may include all of functions and components within the RAN and may interoperate with other functions or components. Like a traditional RAN structure, the O-RAN may also use a CU/DU split structure. An RU may generally have functions for transmitting, receiving, amplifying, and digitizing a radio frequency signal. In an embodiment, the RU may be located near an antenna and a DU. A CU may be located closer to a core network. An FHM may serve as an interface between the RU and the DU, and may multiplex or demultiplex information received from the RU before providing information to the DU. The CU 310, DU, FHM, and RU may be expressed as O-CU, O-DU, O-FHM, and O-RU, respectively.

FIG. 4 is a view of a structure of an Ethernet message according to an embodiment. A destination MAC (medium access control) address 400 in a header of the Ethernet message may indicate a public address of an RU in the case of DL, and may indicate a public address of a specific port of a channel card of a DU (the channel card may perform an MAC layer operation responsible for scheduling, a high-PHY operation, and an operation to convert a data format according to an interface between the RU and the DU) in the case of UL. A source MAC Address 410 may indicate the RU in the case of UL, and may indicate a public address of a specific port of the channel card of the DU in the case of DL.

A virtual LAN (VLAN) Tag 420 has a size of 4 bytes and allows management of C-plane, U-plane, or S-plane messages by mapping them to respective VLAN tags. A tag protocol identifier (TPID) included in the VLAN Tag 420 may be set to 16 bits and may be set to a value of 0x8100 to identify a frame as an IEEE 802.1Q tag frame. This field is located in the same position as that of an Ethertype/Length field in an untagged frame, so it can be used to distinguish an untagged frame from regular frames. Tag control information (TCI) included in the VLAN Tag may also be set to 16 bits and may include the following three fields. Priority code point (PCP) is 3 bits and may express priority of frames. A drop eligible indicator (DEI) may be set to 1 bit and is used separately or in combination with the PCP, and identifies frames that are desirable to be removed when traffic becomes congested. A VLAN identifier (VID) may be set to 12 bits and is a field that indicates which frame a VLAN belongs to. All values except reserved values 0x000 and 0xFFF may be used as VLAN identifiers, and up to 4,094 VLANs may be allowed. The reserved value 0x000 indicates that the frame does not belong to any VLAN. In this case, 802.1Q only specifies a priority and this priority may be referenced as a priority tag. Because Type/Length (Ethertype) is for eCPRI, it can be set to a fixed value of 0xAEFE.

A payload 440 may include a message according to each plane format, including an eCPRI header, as shown in FIG. 4. Content of each field or information of the Ethernet message described in relation to FIG. 4 does not necessarily have to be included all fields, and the disclosure may be performed by omitting the content or/and adding other fields as necessary.

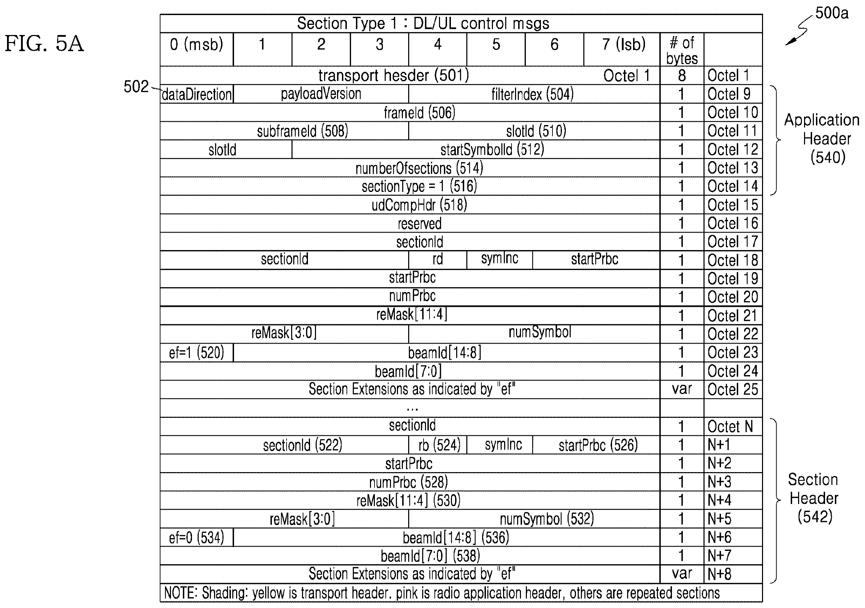

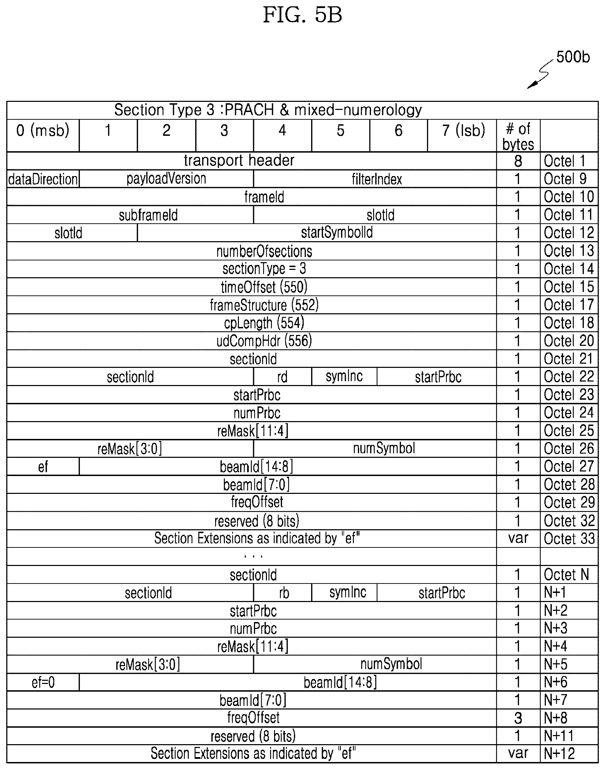

FIGS. 5A and 5B are views illustrating an example of a C-plane message according to an embodiment. FIG. 5A may show a C-plane structure of section type 1, and FIG. 5B may show a C-plane structure of section type 3.

First, looking at each field in FIG. 5A, transport header 501 may include an eCPRI header shown in FIG. 4 or

information according to IEEE-1914.3. dataDirection 502 indicates a direction of a U-Plane message, wherein 0 may indicate UL and 1 may indicate a DL. filterIndex 504 indicates a channel filter of an RU and may be set to 0x1. frameId 506 may indicate a specific frame in units of 10 ms. SubframeId 508 may indicate a specific subframe in units of 1 ms within a corresponding frame. slotId 510 may indicate a specific slot within a corresponding frame.

numberOfsections 514 may indicate the number of sections indicated by a corresponding message. In the case of SectionType 516, one C-plane message may have only one section type. In this example, the SectionType 516 may indicate section type 1. udCompHdr 518 may indicate an IQ bit width (bit) and a compression method for IQ data in all sections of a corresponding message. In more detail, upper 4 bits may be iqWidth, indicating 1 to 16 bits, and lower 4 bits may be compMeth, indicating a compression method. 502 to 518 described above are an application header 540 that can be commonly applied to a corresponding message, and may be included in a similar structure in all C-plane messages.

A C-plane message of section type 1 may include information about an arbitrary section. SectionID 522 indicates an ID of the section, which may be used to match a C-plane message and a U-plane message. rb 524 indicates which PRB is used, wherein 0 may indicate that all PRBs are used, and 1 may indicate that one PRB (every other PRB) is used. StartPrbc 526 is used to indicate the first PRB of a corresponding section, and numPrbc 528 may indicate the number of PRBs in a corresponding section. reMask 530 is a bit pattern that indicates an RE (or subcarrier) corresponding to a specific beam in a corresponding PRB, and different beams may be applied within one PRB through reMask. numSymbol 532 may indicate the number of symbols corresponding to the section. The fields described above may be referred to as a section header 542 for each section.

In addition, the C-plane message may include section extension, and whether or not the section extension is included may be indicated by ef 520. Content of each field or information described in relation to FIG. 5A does not necessarily have to be included all fields, and the disclosure may be performed by omitting the content or/and adding other fields as necessary.

Referring to FIG. 5B, transport header to sectionType are the same as in FIG. 5A, but there is a difference in the next field. Timeoffset 550, framestructure 552, cpLength 554, and udCompHdr 556 are fields that can be checked in C-plane of section type 3. Timeoffset 550 defines a time offset from the start of a slot to the start of a cyclic prefix (CP). Framestructure 552 defines a frame structure, where the first 4 bits define the size of FFT/iFFT used for processing all IQ data associated with a C-plane message, and the remaining 4 bits define sub carrier spacing (SCS) and the number of slots per 1 ms subframe. cpLength 554 indicates a length of the cyclic prefix. udCompHdr 556 defines a compression method and an in-phase and quadrature (IQ) bitwidth for user data in a data section. Because most of the other fields are similar to those in FIG. 5A, their description will be omitted.

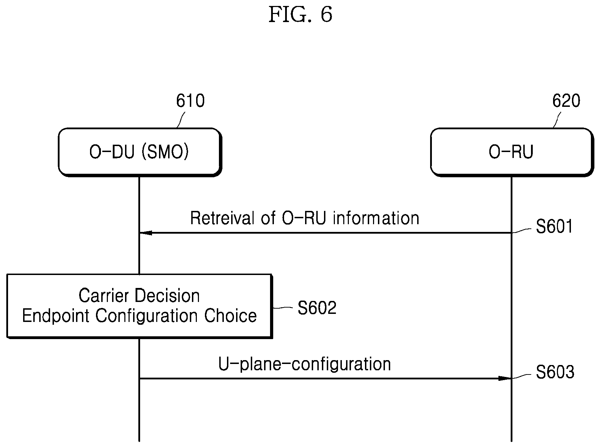

FIG. 6 is a view illustrating an example of signaling between an O-DU and an O-RU for using mixed numerologies in a fronthaul according to an embodiment of the present disclosure.

An O-DU 610 may be a DU or O-DU described in FIGS. 1A to 5B. An O-RU 620 may be an RU or O-RU described in FIGS. 1A to 5B. The O-DU 610 may include a controller or SMO, or may be replaced with a controller or SMO, depending on the embodiment.

Referring to FIG. 6, in operation S601, the O-DU 610 may retrieve O-RU information from the O-RU 620. In operation S601, the O-DU 610 may request the O-RU information from the O-RU 620 through an M-plane, and the O-RU 620 may transmit the requested O-RU information to the O-DU 610.

The O-RU information may include software-based performance such as supported protocols and authentication methods, hardware-based performance related to product shape such as fronthaul line rate and FAN, and radio capacity such as operating bandwidth, number of carriers, carrier bandwidth, carrier type (LTE, NR, NB-IoT), SCS, and spatial stream.

In particular, in the present disclosure, for radio signal generation, the O-RU information may include resource information of the O-RU and capability information of the O-RU. The resource information of the O-RU may include information about resources available to the O-RU. The capability information of the O-RU may include information about the type of O-RU and information about sharing group capability.

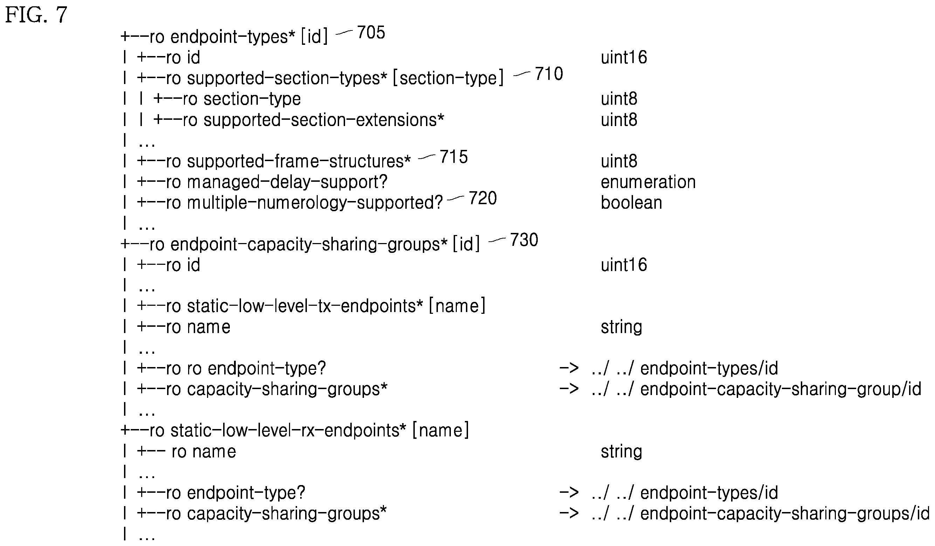

The O-RU information that the O-DU receives from the O-RU may be delivered through an M-plane, and may be delivered through a Yang (yet another next generation) module as shown in FIG. 7.

FIG. 7 is a view illustrating a Yang module showing O-RU information delivered to an O-DU according to an embodiment of the present disclosure.

Referring to FIG. 7, the O-RU information may include endpoint-types information 705 and endpoint-capacity-sharing-groups capability information 730.

The endpoint-type 705 information may include an identifier, section type information 710 supported by the O-RU, frame structure information 715 supported by the O-RU, and information 720 indicating whether multiple numerologies are supported. Here, the information indicating whether multiple numerologies are supported may indicate that the O-RU can enable wireless communication using resources including SCS-specific carriers configured with a plurality of SCSs for one carrier.

The O-DU 610 may identify the section type information, the frame structure information, and whether multiple

numerologies are supported by the O-RU 620, based on the O-RU information.

Returning to FIG. 6, in operation S602, the O-DU 610 may determine resources to be used for communication with the O-RU 610 in the future, based on the information identified for the O-RU 620.

When the received O-RU information includes information indicating that the corresponding O-RU supports multiple numerologies, the O-DU 610 may determine whether to use mixed numerologies based on this.

The O-DU 610 may determine whether to use mixed numerologies in communication with the corresponding O-RU, what section type to use, and which numerology to use, and based on this, may allocate an entire carrier. Here, the numerology may be interpreted as corresponding to the SCS of the carrier. The O-DU 610, when determining to use mixed numerologies, may allocate a plurality of SCS-specific carriers having different SCSs for the determined carrier.

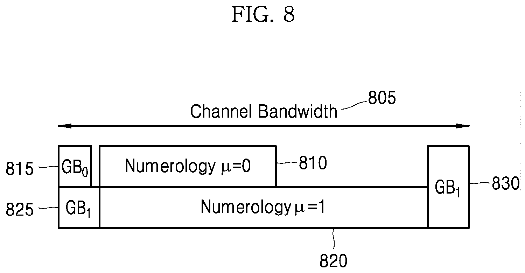

FIG. 8 is a view illustrating an example of allocating a carrier to a channel bandwidth when using mixed numerologies according to an embodiment of the present disclosure.

Referring to FIG. 8, the O-DU may determine which carrier to use to perform communication in an available entire channel frequency band 805.

The O-DU, when determining to use mixed numerologies, may determine which sub-carrier spacing (SCS) to use for each carrier. The SCS is expressed as a numerology and can be represented by $\mu$. $\mu$ can have a value from 0 to 6, representing 15kHz, 30kHz, 60kHz, 120kHz, 240kHz, 480kHz, and 960kHz, respectively, from 0 to 6.

The O-DU may determine a carrier by combining a plurality of numerologies and perform allocation according to the carrier size considering the channel frequency band 805.

For example, in FIG. 8, the O-DU may decide to use a first carrier 810 with SCS 15kHz and a second carrier 820 with SCS 30kHz in order to use mixed numerologies.

The O-DU may allocate the first carrier 810 and the second carrier 820 within a range excluding a guard band (GB) from both ends of the channel frequency band 805.

For example, in FIG. 8, the O-DU may allocate the first carrier 810 within a range excluding a first guard band 815 and a second guard band 830, and may allocate the second carrier 820 within a range excluding a third guard band 825 and the second guard band 830.

Here, the first carrier 810 and the second carrier 820 may be allocated to overlap or not to overlap in the same frequency band, and may be allocated with different resource block (RB) sizes. The O-DU may set the SCS and size of the carrier based on the O-RU information obtained from the O-RU.

Returning to FIG. 6, in operation S603, the O-DU 610 may determine a C/U-plane configuration for the O-RU and transmit it to the O-RU 620, based on allocating the carrier in the frequency band using mixed numerologies.

When the O-DU 610 performs the C/U-plane configuration for the O-RU 620 to perform communication, it may transmit an M-plane message (e.g., U-plane configuration, hereinafter U-plane configuration) to the O-RU. Here, the U-plane configuration may be delivered through a Yang module.

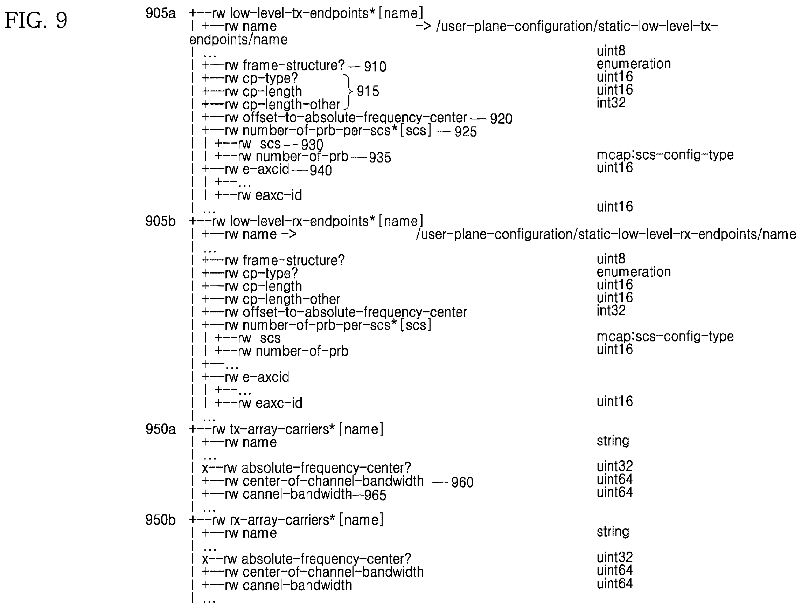

FIG. 9 is a view illustrating a Yang module for a U-plane configuration according to an embodiment of the present disclosure.

The Yang module of FIG. 9 may represent information included in the U-plane configuration that the O-DU 610 transmits to the O-RU 620 in FIG. 6.

Referring to FIG. 9, the U-plane configuration may include low-level-tx-endpoints information 905a, low-level-rx-endpoints information 905b, tx-array-carriers information 930a, and rx-array-carriers information 930b. Here, the relationship between the low-level-tx-endpoints information 905a and the tx-array-carriers information 950a is commonly applied to the low-level-rx-endpoints information 905b and the rx-array-carriers information 950b, so it will be described only for the transmission side.

First, the low-level-tx-endpoints information 905a may include frame-structure information 910, information about a cyclic prefix (CP) (cp-type, cp-length, cp-length-other) 915, offset-to-absolute-frequency-center information 920, number-of-prb-per-scs information 925, and eAxC ID information (e-axcid) 940.

Here, the frame structure information 910 may include information about the SCS to be used and symbols. The information about the CP 915 may include information about the section type through the type of CP, length of CP, etc. The offset-to-absolute-frequency-center information 920 represents a carrier center frequency offset value for a section type 1 other than a section type 3, and indicates the interval between the center of the entire carrier frequency band and the center of the first resource element (RE) of the first resource block of the allocated carrier, using half of the SCS value as a unit. The number-of-prb-per-scs information 925 may include information 930 about the SCS of each carrier and information 935 about the number of PRBs. The information about the SCS 930 may include an SCS value defined for the framestructure field of the C-plane. The information about the number of PRBs 935 may indicate the maximum number of PRBs to be used per symbol. In addition, the number-of-prb-per-scs information 925 may be included in a list form. That is, the number-of-prb-per-scs information 925 may be included in the U-plane configuration corresponding to the number of determined SCSs when using mixed numerologies. The eAxC ID information 940 may include information about the eAxC ID to be used.

The tx-array-carriers information 950a may include center-of-channel-bandwidth information 960, channel-

bandwidth information 965, etc.

Here, the center-of-channel-bandwidth information 960 may be information indicating the center of the bandwidth of the entire carrier. It can be applied commonly to all included numerologies. The channel-bandwidth information 965 may indicate the bandwidth of the entire carrier expressed in Hertz.

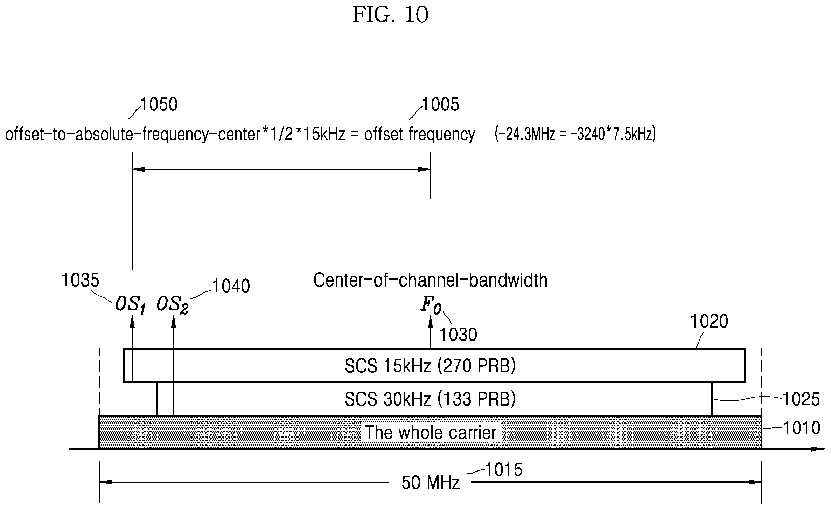

The O-DU performs the U-plane configuration as in FIG. 9 and can transmit it to the O-RU through an M-plane message using a YANG module. When a carrier structure is schematically illustrated based on the U-plane configuration shown through the YANG module in FIG. 9, it can be shown as in FIG. 10.

FIG. 10 is a view schematically illustrating an example of a carrier structure using mixed numerologies based on the U-plane configuration of FIG. 9, according to an embodiment of the present disclosure.

Referring to FIG. 10, an entire carrier 1010 may have a channel bandwidth 1015 of 50MHz. The O-DU and the O-RU may determine the channel bandwidth 1015 of the entire carrier 1010 and a channel frequency band center (F0) 1030, based on information included in the U-plane configuration (e.g., the center-of-channel-bandwidth information 960 and the channel-bandwidth information 965 of FIG. 9).

In the example of FIG. 10, mixed numerologies are applied, and a first carrier 1020 and a second carrier 1025, which are SCS-specific carriers, may be allocated together. The first carrier 1020 may be configured with an SCS of 15kHz and 270 PRBs. The second carrier 1025 may be configured with an SCS of 30kHz and 133 PRBs. Here, the first carrier 1020 may be a carrier using section type 1.

The O-DU and the O-RU may identify the use of mixed numerologies and the SCS and number of PRBs of each carrier, based on information included in the U-plane configuration (e.g., the number-of-prb-per-scs information 925 of FIG. 9).

In addition, the O-DU and the O-RU may identify an offset frequency 1005 indicating the position of the center (OS1) 1035 of the first resource element of the first RB of the first carrier 1020 that does not use section type 3, based on information included in the U-plane configuration (e.g., the offset-to-absolute-frequency-center information 920 of FIG. 9). For example, the O-DU and the O-RU may identify the position of the center (OS1) 1035 of the first resource element of the first resource block of the first carrier by utilizing the entire bandwidth 1015 of 50MHz, the channel frequency band center (F0) 1030, and the offset-to-absolute-frequency-center information 1050 (-3240). That is, the O-DU and the O-RU may identify the offset frequency indicating the center position of the first RE of the start RB of the corresponding SCS-specific carrier on the entire carrier by using Equation 1. Therefore, the offset frequency may have a + or - value based on the center of the channel bandwidth.

Offset-to-absolute-frequency-center * 1/2 * SCS of the corresponding carrier = offset frequency [Equation 1]

Referring to FIG. 10, the O-DU and the O-RU can identify that -24.3MHz is the first offset frequency 1005 indicating the position on the entire carrier of the center (OS1) 1035 of the first RE of the first RB of the first carrier 1020 through the operation of -3240 * 1/2 * 15.

The O-DU and the O-RU may identify the entire first carrier 1020 by arranging RBs based on the SCS and the total number of PRBs from the first RE of the first RB of the determined first carrier 1220.

Similarly, the second carrier 1025 may also identify the center position (OS2) 1040 of the first RE of the first RB of the second carrier 1025 and its arrangement through the same method as the first carrier 1020.

However, to apply the same method as the first carrier 1020 to the second carrier 1025, the second carrier 1025 must be a carrier that does not use section type 3, like the first carrier 1020. That is, when using mixed numerologies, only when all of the respective carriers are carriers other than section type 3, the starting point and arrangement of all carriers can be identified. To configure such a case, the O-DU should allocate a different eAxC ID to each carrier and not use section type 3.

However, in various embodiments described in the present disclosure, when the O-DU determines to use mixed numerologies, it allocates a single identical eAxC ID for a plurality of numerologies and can use a method of differentiating the section type for each of the plurality of numerologies. For example, when it is determined to use two SCSs as mixed numerologies, the same eAxC ID is allocated to each SCS, and one numerology uses section type 1, and the other numerology can be configured with a carrier using section type 3.

Applying the above case to FIG. 10, when identifying the frequency arrangement for the second carrier 1025 using section type 3, since the offset-to-absolute-frequency-center information for the second carrier 1205 is not included in the U-plane configuration, the position of the first RB of the second carrier 1025 cannot be identified, and therefore, the O-RU cannot identify the arrangement of the second carrier 1025. In this case, in order for the O-RU to identify the second carrier 1025, it must prepare for all cases by assuming a carrier of the maximum size.

That is, when performing allocation by allocating only one eAxC ID in the U-plane configuration currently determined by the O-DU for the use of mixed numerologies, the O-RU side must use the maximum available resources to accurately identify the carrier with only the given U-plane configuration information, which is not efficient in terms of cost

and resources.

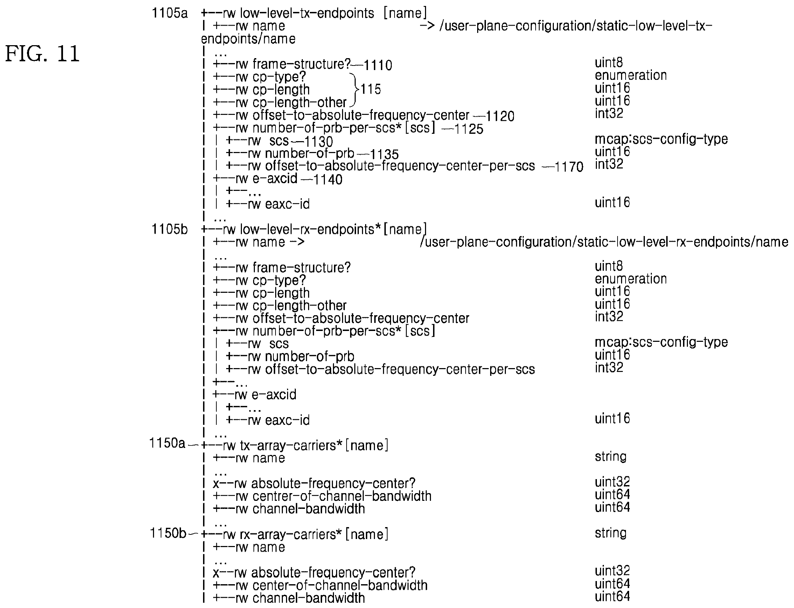

Therefore, FIGS. 11 and below describe a method for an O-RU to efficiently identify an allocated carrier using minimum computation and resources when using mixed numerologies.

FIG. 11 is a view illustrating a Yang module for a modified U-plane configuration according to various embodiments of the present disclosure.

The Yang module of FIG. 11 may represent information included in the U-plane configuration that the O-DU 610 transmits to the O-RU 620 in FIG. 6.

Referring to FIG. 11, the U-plane configuration may include low-level-tx-endpoints information 1105a, low-level-rx-endpoints information 1105b, tx-array-carriers information 1130a, and rx-array-carriers information 1130b. Here, the relationship between the low-level-tx-endpoints information 1105a and the tx-array-carriers information 1150a is commonly applied to the low-level-rx-endpoints information 1105b and the rx-array-carriers information 1150b, so it will be described only for the transmission side.

First, the low-level-tx-endpoints information 1105a may include frame-structure information 1110, information about a cyclic prefix (CP) (cp-type, cp-length, cp-length-other) 1115, offset-to-absolute-frequency-center information 1120, number-of-prb-per-scs information 1125, and eAxC ID information (e-axcid) 1140.

Here, the frame structure information 1110 may include information about the SCS to be used and symbols. The information about the CP 1115 may include information about the section type through the type of CP, length of CP, etc. The offset-to-absolute-frequency-center information 1120 represents a carrier center frequency offset value for a section type 1 other than a section type 3, and indicates the interval between the center of the entire carrier frequency band and the center of the first resource block of the allocated carrier. The number-of-prb-per-scs information 1125 may include information 1130 about the SCS of each carrier and information 1135 about the number of PRBs. In addition, the number-of-prb-per-scs information 1125 may include offset-to-absolute-frequency-center-per-scs information 1170. Here, the offset-to-absolute-frequency-center-per-scs information 1170 may be information indicating the offset information from the center of the entire frequency band to the center of the first RB of the first RE of each carrier for each different SCS. The number-of-prb-per-scs information 1125 may be included in a list form. That is, the number-of-prb-per-scs information 1125 may be included in the U-plane configuration corresponding to the number of determined SCSs when using mixed numerologies. That is, when using mixed numerologies, the information about the SCS 1130, the information about the number of PRBs 1135, and the offset-to-absolute-frequency-center-per-scs information 1170 may be included in the U-plane configuration as many as the number of SCSs. For example, when using two SCSs, the number-of-prb-per-scs information 1125 may include first offset-to-absolute-frequency-center-per-scs information and second offset-to-absolute-frequency-center-per-scs information. The eAxC ID information 1140 may include information about the eAxC ID to be used.

The tx-array-carriers information 1150a may include center-of-channel-bandwidth information 1160 and channel-bandwidth information 1165.

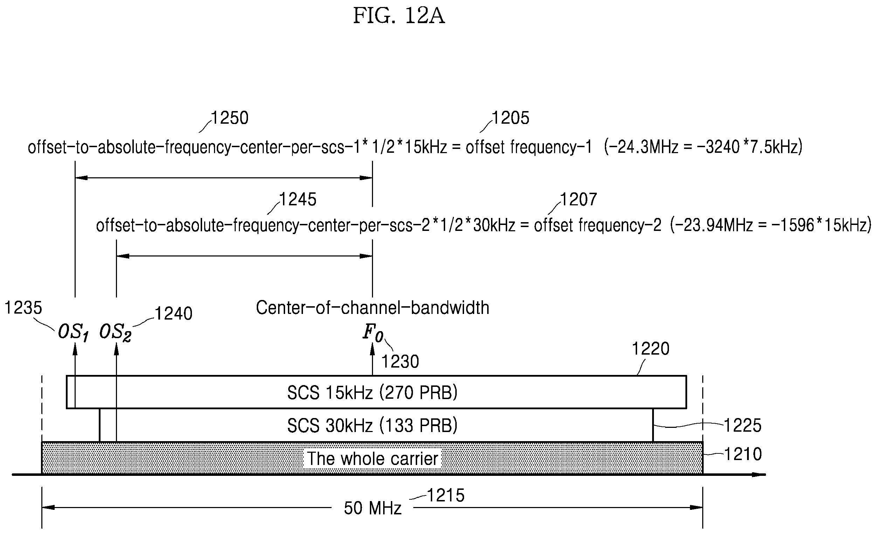

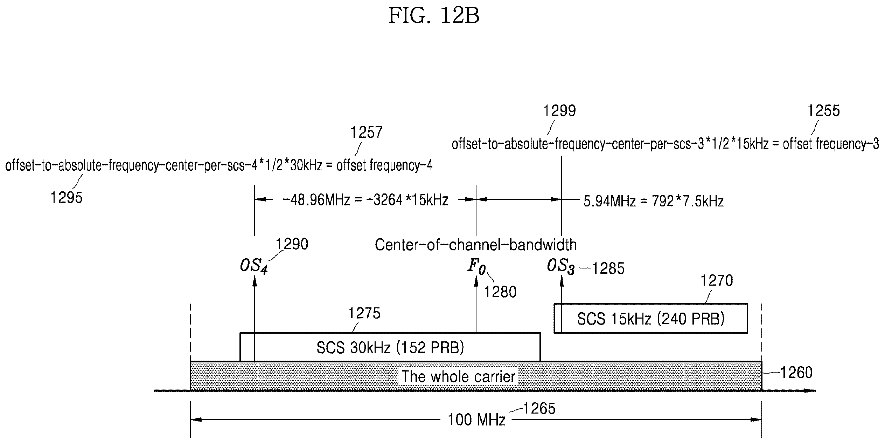

The O-DU performs the U-plane configuration as in FIG. 11 and can transmit it to the O-RU through an M-plane message using a YANG module. When a carrier structure is schematically illustrated based on the U-plane configuration shown through the YANG module in FIG. 11, it can be shown as in FIGS. 12A and 12B.

FIGS. 12A and 12B are views schematically illustrating various examples of a carrier structure using mixed numerologies based on the modified U-plane configuration of FIG. 11, according to an embodiment of the present disclosure.

First, referring to FIG. 12A, an entire carrier 1210 may have a channel bandwidth 1215 of 50MHz. The O-DU and the O-RU may determine the channel bandwidth 1215 of the entire carrier 1210 and a channel frequency band center (F0) 1230, based on information included in the U-plane configuration (e.g., the center-of-channel-bandwidth information 1160 and the channel-bandwidth information 1165 of FIG. 11).

In FIG. 12A, mixed numerologies are applied, and a first carrier 1220 and a second carrier 1225 may be allocated together. The first carrier 1220 may be configured with an SCS of 15kHz and 270 PRBs. The second carrier 1225 may be configured with an SCS of 30kHz and 133 PRBs. Here, the first carrier 1220 may be a carrier using section type 1, and the second carrier 1225 may be a carrier using section type 3.

The O-DU and the O-RU may identify the use of mixed numerologies and the SCS, the number of PRBs, and the offset-to-absolute-frequency-center-per-scs information of each carrier, based on information included in the U-plane configuration (e.g., the number-of-prb-per-scs information 1125 of FIG. 11).

In FIG. 12A, the O-DU and the O-RU may identify a first offset frequency 1205 indicating the position of the center (OS1) 1235 of the first RE of the first RB of the first carrier 1220 that does not use section type 3, based on information included in the U-plane configuration (e.g., the offset-to-absolute-frequency-center information 1150 or the offset-to-absolute-frequency-center-per-scs information 1170 of FIG. 11, where the offset-to-absolute-frequency-center-per-scs information may be represented as first offset-to-absolute-frequency-center-per-scs information and second offset-to-absolute-frequency-center-per-scs information depending on the carrier). For example, the O-DU and the O-RU may identify the first offset frequency 1205 indicating the position of the center (OS1) 1235 of the first RE of the first RB of the first

carrier by utilizing the entire bandwidth 1215 of 50MHz, the channel frequency band center (F0) 1230, and the first offset-to-absolute-frequency-center-per-scs information 1250 corresponding to the first carrier.

Referring to FIG. 12A, the O-DU and the O-RU can identify that -24.3MHz is the first offset frequency 1205 indicating the position of the center (OS1) 1235 of the first RE of the first RB of the first carrier 1220 through the operation of -3240 * 1/2 * 15.

The O-DU and the O-RU may identify the entire first carrier 1220 by arranging RBs based on the SCS and the total number of PRBs from the first RB of the determined first carrier 1220.

In the case of FIG. 10, in the case where the second carrier 1025 is a carrier using section type 3, since the offset-to-absolute-frequency-center information for the second carrier 1025 could not be confirmed in the U-plane information, the entire second carrier 1025 had to be identified by assuming the entire resource. Or, the O-RU needs to have the capability to analyze multiple C-Planes with minimum latency, and even in this case, performance degradation cannot be avoided.

However, in the case of FIG. 12A, since the PRB number information 1125 of the U-plane configuration shown in FIG. 11 further includes the offset-to-absolute-frequency-center-per-scs information 1170 for each carrier, the second SCS-specific offset-to-absolute-frequency-center information for the second carrier 1225 using section type 3 can be identified.

In FIG. 12A, the O-DU and the O-RU may identify a second offset frequency 1207 indicating the position of the center (OS2) 1240 of the first RE of the first RB of the second carrier 1225 using section type 3, based on information included in the U-plane configuration (e.g., the offset-to-absolute-frequency-center-per-scs information 1170 of FIG. 11, where the offset-to-absolute-frequency-center-per-scs information may be represented as first offset-to-absolute-frequency-center-per-scs information and second offset-to-absolute-frequency-center-per-scs information depending on the carrier). For example, the O-DU and the O-RU may identify the second offset frequency 1207 indicating the position of the center (OS2) 1240 of the first RE of the first RB of the second carrier by utilizing the entire bandwidth 1215 of 50MHz, the channel frequency band center (F0) 1230, and the second offset-to-absolute-frequency-center-per-scs information 1245 corresponding to the second carrier.

Referring to FIG. 12A, the O-DU and the O-RU can identify that -23.94MHz is the second offset frequency 1207 indicating the position of the center (OS2) 1240 of the first RE of the first RB of the second carrier 1225 through the operation of -1596 * 1/2 * 30.

The O-DU and the O-RU may identify the entire second carrier 1225 by arranging RBs based on the SCS and the total number of PRBs from the first RB of the determined second carrier 1225.

Next, FIG. 12B shows a case where a plurality of carriers are not overlapped and are located in different directions from the center, in the carrier structure using mixed numerologies shown based on the modified U-plane configuration of FIG. 11, similar to FIG. 12A.

Referring to FIG. 12B, an entire carrier 1260 may have a channel bandwidth 1265 of 100MHz. The O-DU and the O-RU may determine the channel bandwidth 1265 of the entire carrier 1260 and a channel frequency band center (F0) 1280, based on information included in the U-plane configuration (e.g., the center-of-channel-bandwidth information 1160 and the channel-bandwidth information 1165 of FIG. 11).

In FIG. 12B, mixed numerologies are applied, and a third carrier 1270 and a fourth carrier 1275 may be allocated together. The third carrier 1270 may be configured with an SCS of 15kHz and 240 PRBs. The fourth carrier 1275 may be configured with an SCS of 30kHz and 152 PRBs. Here, the third carrier 1270 may be a carrier using section type 1, and the fourth carrier 1275 may be a carrier using section type 3.

The O-DU and the O-RU may identify the use of mixed numerologies and the SCS, the number of PRBs, and the offset-to-absolute-frequency-center-per-scs information of each carrier, based on information included in the U-plane configuration (e.g., the number-of-prb-per-scs information 1125 of FIG. 11).

In FIG. 12B, the O-DU and the O-RU may identify a third offset frequency 1255 indicating the position of the center (OS3) 1285 of the first RE of the first RB of the third carrier 1270 that does not use section type 3, based on information included in the U-plane configuration (e.g., the offset-to-absolute-frequency-center information 1150 or the offset-to-absolute-frequency-center-per-scs information 1170 of FIG. 11, where the offset-to-absolute-frequency-center-per-scs information may be represented as third offset-to-absolute-frequency-center-per-scs information and fourth offset-to-absolute-frequency-center-per-scs information depending on the carrier). For example, the O-DU and the O-RU may identify the third offset frequency 1255 indicating the position of the center (OS3) 1285 of the first RE of the first RB of the third carrier by utilizing the entire bandwidth 1265 of 100MHz, the channel frequency band center (F0) 1280, and the third offset-to-absolute-frequency-center-per-scs information 1299 corresponding to the third carrier.

Referring to FIG. 12B, the O-DU and the O-RU can identify that +5.94MHz is the third offset frequency 1255 indicating the position of the center (OS3) 1285 of the first RE of the first RB of the third carrier 1270 through the operation of +792 * 1/2 * 15.

The O-DU and the O-RU may identify the entire third carrier 1270 by arranging RBs based on the SCS and the total number of PRBs from the first RB of the determined third carrier 1270.

In FIG. 12B, the O-DU and the O-RU may identify a fourth offset frequency 1257 indicating the position of the center (OS4) 1290 of the first RE of the first RB of the fourth carrier 1275 using section type 3, based on information included in the U-plane configuration. For example, the O-DU and the O-RU may identify the fourth offset frequency 1257 indicating the position of the center (OS4) 1280 of the first RE of the first RB of the fourth carrier by utilizing the entire bandwidth 1265 of 100MHz, the channel frequency band center (F0) 1280, and the fourth offset-to-absolute-frequency-center-per-scs information 1295 corresponding to the fourth carrier.

Referring to FIG. 12B, the O-DU and the O-RU can identify that -48.96MHz is the fourth offset frequency 1257 indicating the position of the center (OS4) 1280 of the first RE of the first RB of the fourth carrier 1275 through the operation of -3264 * 1/2 * 30.

The O-DU and the O-RU may identify the entire fourth carrier 1250 by arranging RBs based on the SCS and the total number of PRBs from the first RB of the determined fourth carrier 1250.

In FIG. 12B, the offset-to-absolute-frequency-center-per-scs information and the offset frequency may have a - value if located to the left of the channel frequency band center (F0) and a + value if located to the right.

Returning to FIG. 6, when the O-RU 620 receives the M-plane message indicating the U-plane configuration in operation S603, it can efficiently identify the allocated carrier resource and utilize it for wireless communication, based on the methods described above.

Although the operation of the O-DU 610 has been described as the operation of the O-DU in FIGS. 6 to 12B, similar operations may be performed by an SMO, a controller, etc.

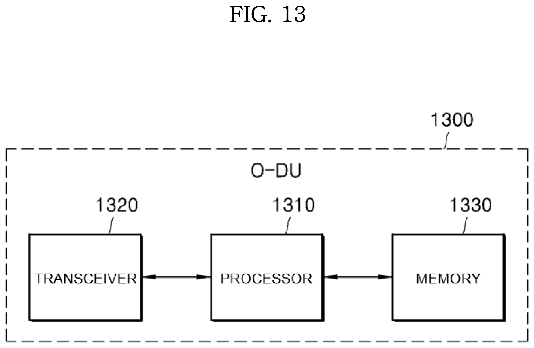

FIG. 13 is a view of a configuration of an O-DU according to an embodiment of the present disclosure.

The O-DU of FIG. 13 may be configured to perform the same or similar operations as the O-DU described in FIGS. 1A to 12B.

According to an embodiment of the present disclosure, in an O-DU 1300, each function may be included in one device, and each function may be separated into each device.

According to an embodiment of the present disclosure, the O-DU 1300 may include a controller (or processor) 1310 that controls the overall operation of the O-DU, a transceiver (or transceiver unit) 1320 including a transmitter and a receiver, and a memory 1330. Of course, it is not limited to this example, and the O-DU 1300 may include more components or fewer components than those shown in FIG. 13.

According to an embodiment of the present disclosure, the transceiver unit 1320 may transmit and receive signals with other network nodes (e.g., O-RU, controller, SMO, upper network entity). The signals that the transceiver unit 1320 transmits and receives with other network nodes may include a C-plane signal, a U-plane signal, an S-plane signal, an M-plane signal, uplink data, and downlink data. In addition, the transceiver unit 1320 may receive a signal through a wireless path or a wired path such as a Fiber and transmit it to the processor 1310, and transmit a signal determined and output from the processor 1310.

According to an embodiment of the present disclosure, the processor 1310 may control the O-DU device to perform any one of the operations of the embodiments of FIGS. 1A to 12B. Meanwhile, the processor 1310, the memory 1330, and the transceiver unit 1320 do not necessarily have to be implemented as separate modules, and may be implemented as one component in the form of a single chip. In addition, the processor 1310, the memory 1330, and the transceiver unit 1320 may be electrically connected to each other. Furthermore, the processor 1310 may be an application processor (AP), a communication processor (CP), a circuit, an application-specific circuit, or at least one processor.

According to an embodiment of the present disclosure, the memory 1330 may store data such as basic programs, applications, and configuration information for the operation of the O-DU 1300. In addition, the memory 1330 may store uplink and downlink data received by the O-DU. In particular, the memory 1330 may provide stored data in response to a request from the processor 1310. The memory 1330 may be composed of a storage medium such as read-only memory (ROM), random-access memory (RAM), hard disk, CD-ROM, and DVD, or a combination of storage media. In addition, there may be a plurality of memories 1330. In addition, the processor 1310 may perform the embodiments described above based on a program stored in the memory 1330 for performing the embodiments of the present disclosure described above.

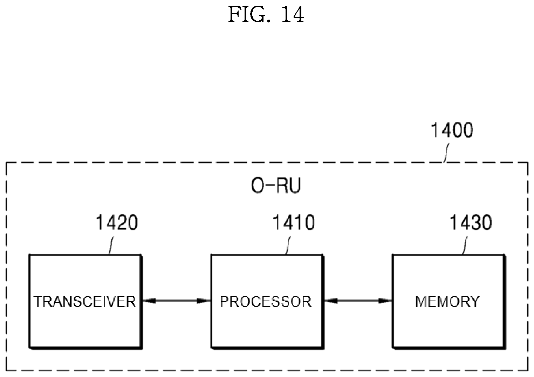

FIG. 14 is a view of a configuration of an O-RU according to an embodiment of the present disclosure.

The O-RU 1400 of FIG. 14 may be configured to perform the same or similar operations as the O-RU described in FIGS. 1A to 12B.

According to an embodiment of the present disclosure, in an O-RU 1400, each function may be included in one device, and each function may be separated into each device.

According to an embodiment of the present disclosure, the O-RU 1400 may include a controller (or processor) 1410 that controls the overall operation of the O-RU, a transceiver (or transceiver unit) 1420 including a transmitter and a receiver, and a memory 1430. Of course, it is not limited to this example, and the O-RU 1400 may include more components or fewer components than those shown in FIG. 14.

According to an embodiment of the present disclosure, the transceiver unit 1420 may transmit and receive signals with other network nodes (e.g., O-DU, controller, SMO, upper network entity, terminal, etc.). The signals that the

transceiver unit 1420 transmits and receives with other network nodes may include a C-plane signal, a U-plane signal, an S-plane signal, an M-plane signal, uplink data, and downlink data. In addition, the transceiver unit 1420 may receive a signal through a wireless path or a wired path such as a Fiber and transmit it to the processor 1410, and transmit a signal determined and output from the processor 1410.

According to an embodiment of the present disclosure, the processor 1410 may control the O-RU device to perform any one of the operations of the embodiments of FIGS. 1A to 12B. Meanwhile, the processor 1410, the memory 1430, and the transceiver unit 1420 do not necessarily have to be implemented as separate modules, and may be implemented as one component in the form of a single chip. In addition, the processor 1410, the memory 1430, and the transceiver unit 1420 may be electrically connected to each other. Furthermore, the processor 1410 may be an AP (Application Processor), a CP (Communication Processor), a circuit, an application-specific circuit, or at least one processor.

According to an embodiment of the present disclosure, the memory 1430 may store data such as basic programs, applications, and configuration information for the operation of the O-RU 1400. In addition, the memory 1430 may store uplink and downlink data received by the O-RU. In particular, the memory 1430 may provide stored data in response to a request from the processor 1410. The memory 1430 may be composed of a storage medium such as read-only memory (ROM), random-access memory (RAM), hard disk, CD-ROM, and DVD, or a combination of storage media. In addition, there may be a plurality of memories 1430. In addition, the processor 1410 may perform the embodiments described above based on a program stored in the memory 1430 for performing the embodiments of the present disclosure described above.

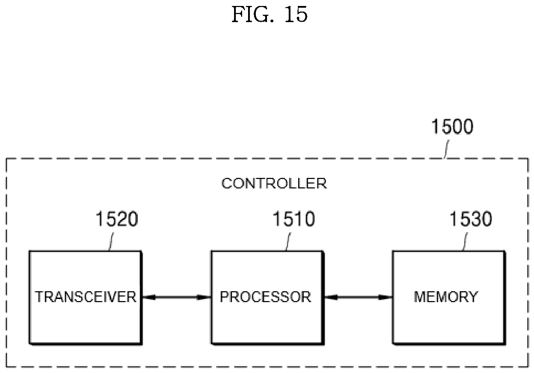

FIG. 15 is a view of a configuration of a controller according to an embodiment of the present disclosure.

The controller of FIG. 15 may be configured to perform the same or similar operations as the controller or SMO described in FIGS. 1A to 12B.

According to an embodiment of the present disclosure, in a controller 1500, each function may be included in one device, and each function may be separated into each device.

According to an embodiment of the present disclosure, the controller 1500 may include a controller (or processor) 1510 that controls the overall operation of the controller, a transceiver (or transceiver unit) 1320 including a transmitter and a receiver, and a memory 1530. Of course, it is not limited to this example, and the controller 1500 may include more components or fewer components than those shown in FIG. 15.

According to an embodiment of the present disclosure, the transceiver unit 1520 may transmit and receive signals with other network nodes (e.g., O-RU, O-DU, upper network entity). The signals that the transceiver transmits and receives with other network nodes may include a C-plane signal, a U-plane signal, an S-plane signal, an M-plane signal, uplink data, and downlink data. In addition, the transceiver unit 1520 may receive a signal through a wireless path or a Fiber-like wired path and transmit it to the processor 1510, and transmit a signal determined and output from the processor 1510 through the channel.

According to an embodiment of the present disclosure, the processor 1510 may control the controller device to perform any one of the operations of the embodiments of FIGS. 1A to 12B. Meanwhile, the processor 1510, the memory 1530, and the transceiver unit 1520 do not necessarily have to be implemented as separate modules, and may be implemented as one component in the form of a single chip. In addition, the processor 1510, the memory 1530, and the transceiver unit 1520 may be electrically connected to each other. Furthermore, the processor 1510 may be an AP (Application Processor), a CP (Communication Processor), a circuit, an application-specific circuit, or at least one processor.

According to an embodiment of the present disclosure, the memory 1530 may store data such as basic programs, applications, and configuration information for the operation of the controller 1500. In addition, the memory 1530 may store uplink and downlink data received by the controller. In particular, the memory 1530 may provide stored data in response to a request from the processor 1510. The memory 1530 may be composed of a storage medium such as read-only memory (ROM), random-access memory (RAM), hard disk, CD-ROM, and DVD, or a combination of storage media. In addition, there may be a plurality of memories 1530. In addition, the processor 1510 may perform the embodiments described above based on a program stored in the memory 1530 for performing the embodiments of the present disclosure described above.

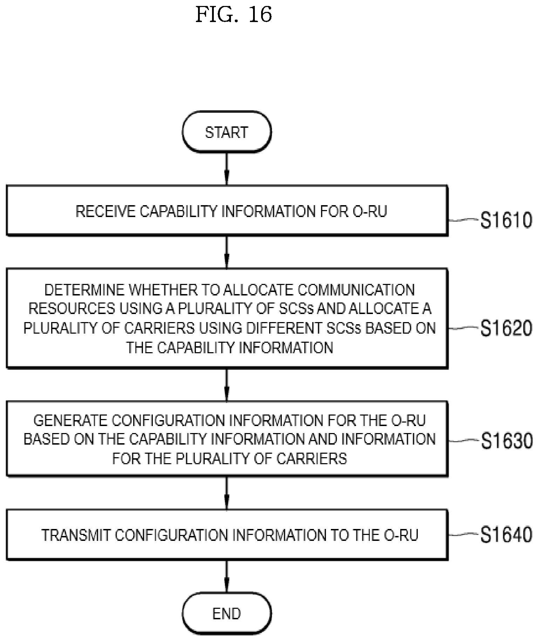

FIG. 16 is a flowchart illustrating an operation of an O-DU for performing communication utilizing mixed numerologies according to an embodiment of the present disclosure.

The O-DU and the O-RU of FIG. 16 may be the same as or similar to the O-DU and the O-RU described in FIGS. 1 to 15.

In operation S1601, the O-DU may receive capability information for the O-RU (e.g., the O-RU information of FIGS. 6 and 7).

In an embodiment, the capability information may include mixed numerology capability information indicating whether the O-RU can use resources allocated using a plurality of SCSs (e.g., information 720 indicating whether multiple numerologies are supported in FIG. 7), and the capability information may include section type information supported by

the O-RU (e.g., section type information 710 supported by the O-RU in FIG. 7) and frame structure information (e.g., frame structure information 715 supported by the O-RU in FIG. 7).

In operation S1602, the O-DU may determine whether to allocate communication resources using a plurality of SCSs to the O-RU based on the capability information for the O-RU (e.g., the entire carrier 1010, 1210, 1260 of FIG. 10, FIG. 12A, and FIG. 12B), and, upon determining to allocate communication resources using a plurality of SCSs, may allocate a plurality of carriers using different SCSs for the communication resource (e.g., a first carrier 1020 and a second carrier 1025 of FIG. 10, a first carrier 1220 and a second carrier 1225 of FIG. 12A, a third carrier 1270 and a fourth carrier 1275 of FIG. 12B).

In an embodiment, when allocating the plurality of carriers, the O-DU may allocate the same extended antenna-carrier (eAxC) ID to each of the plurality of carriers and determine a section type for at least one carrier among the plurality of carriers as section type 3.

In operation S1603, the O-DU may generate configuration information for the O-RU based on the capability information for the O-RU and information about the allocated plurality of carriers (e.g., the U-plane configuration of FIGS. 6 and 9, the modified U-plane configuration of FIG. 11).

In an embodiment, the configuration information for the O-RU may include a center frequency offset for each of the plurality of carriers configured with the different SCSs (e.g., the offset-to-absolute-frequency-center-per-scs information of FIG. 11).

In an embodiment, the center frequency offset may indicate an offset value from the center of the channel bandwidth of the communication resource to the center of the first resource element (RE) of the first resource block of each of the plurality of carriers (e.g., the center points 1035, 1040 of FIG. 10, the center points 1235, 1240 of FIG. 12A, the center points 1285, 1290 of FIG. 12B).

In an embodiment, when generating the configuration information, the O-DU may determine a center of a channel bandwidth for the communication resource, determine a center frequency offset of at least one carrier configured with the section type 3 based on the center of the channel bandwidth, and generate the configuration information based on the center frequency offset of the at least one carrier configured with the section type 3.

In an embodiment, the configuration information is received through a management plane (M-plane) message configured as a YANG module, and the center frequency offset may be included in a list indicating the number of resource blocks for each of the plurality of carriers on the YANG module (e.g., the number-of-prb-per-scs information 1125 of FIG. 11).

In operation S1604, the O-DU may transmit the configuration information for the O-RU to the O-RU.

Various operations of the methods described above may be performed by any suitable means capable of performing corresponding functions. The means may include, but is not limited to, various hardware and/or software component(s) and/or module(s), including an application specific integrated circuit (ASIC), or a processor. In general, when there are operations corresponding to the drawings, these operations may have corresponding counterpart means + functional components having the same number.

The various illustrative logic blocks, modules, and circuits described in connection with the present disclosure may be implemented or performed by a general-purpose processor, a digital signal processor (DSP), an application specific integrated circuit (ASIC), a field programmable gate array (FPGA) or other programmable logic device (PLD), a discrete gate or transistor logic, discrete hardware components, or any combination thereof designed to perform the functions disclosed herein. The general-purpose processor may be a microprocessor, but may alternatively be any commercially available processor, controller, microcontroller, or state machine. The processor may also be implemented in a combination of computing devices, for example, a combination of the DSP and the microprocessor, a plurality of microprocessors, one or more microprocessors in connection with a DSP core, or any other such configuration.

And, the term "determine" covers a wide variety of actions. For example, "determine" may include calculating, computing, processing, deriving, investigating, looking up (e.g., looking up in a table, database, or other data structure), and ascertaining. Also, "determine" may include receiving (e.g., receiving information) and accessing (accessing data in a memory). Also, "determine" may include resolving, selecting, choosing, and establishing.

Numerous modifications and adaptations will be readily apparent to one of ordinary skill in the art without departing from the essential characteristics of the technical idea of the present disclosure.

Accordingly, the embodiments illustrated in the present disclosure are not intended to limit the technical idea of the present disclosure but are for illustrative purposes, and the scope of the technical idea of the present disclosure is not limited by these embodiments.

The scope of protection of the inventive concept of the present disclosure should be interpreted in accordance with the claims below, and all inventive concepts within the equivalent scope should be construed as being included in the scope of the inventive concept of the present disclosure.

## Claims

1. A method performed by an O-DU (open RAN distributed unit) in a communication system, the method comprising:

   receiving capability information for an O-RU (open RAN radio unit) from the O-RU;
   determining whether to allocate communication resources to the O-RU using a plurality of sub-carrier spacings (SCSs) and allocating a plurality of carriers using different SCSs for the communication resource, based on the capability information;
   generating configuration information for the O-RU based on the capability information and information about the allocated plurality of carriers; and
   transmitting the generated configuration information to the O-RU,
   wherein the configuration information includes a center frequency offset for each of the plurality of carriers configured with the different SCSs.

2. The method of claim 1, wherein
   the center frequency offset indicates an offset value from a center of a channel bandwidth of the communication resource to a center of a first resource element (RE) of a first resource block of each of the plurality of carriers.

3. The method of claim 1, wherein

   the capability information includes mixed numerology capability information indicating whether the O-RU can use resources allocated using a plurality of SCSs, and
   the capability information includes section type information and frame structure information supported by the O-RU.

4. The method of claim 1,
   wherein the allocating of the plurality of carriers using the different SCSs for the communication resource comprises:

   allocating the same extended antenna-carrier (eAxC) ID to each of the plurality of carriers; and
   determining a section type for at least one carrier among the plurality of carriers as section type 3.

5. The method of claim 4,
   wherein the generating of the configuration information comprises:

   determining a center of a channel bandwidth for the communication resource;
   determining a center frequency offset of at least one carrier configured with the section type 3 based on the center of the channel bandwidth; and
   generating the configuration information based on the center frequency offset of the at least one carrier configured with the section type 3.

6. A method performed by an O-RU (open RAN radio unit) in a communication system, the method comprising:

   receiving configuration information from an O-DU (open RAN distributed unit);
   identifying a plurality of carriers configured with different sub-carrier spacings (SCSs) based on the received configuration information; and
   determining a wireless communication resource based on the plurality of carriers,
   wherein the configuration information includes a center frequency offset for each of the plurality of carriers.

7. The method of claim 6,
   wherein the center frequency offset indicates an offset value from a center of a channel bandwidth of the communication resource to a center of a first resource element of a first resource block of each of the plurality of carriers.

8. The method of claim 6, wherein

   the plurality of carriers are configured with the same eAxC ID, and
   at least one carrier among the plurality of carriers has a section type of section type 3.

9. The method of claim 8,

wherein the center frequency offset includes a center frequency offset of at least one carrier configured with the section type 3.

**10.** The method of claim 6, wherein

the configuration information is received through a management plane (M-plane) message configured as a YANG module, and
the center frequency offset is included in a list indicating the number of resource blocks for each of the plurality of carriers in the YANG module.

**11.** An O-DU (open RAN distributed unit) comprising:

a transceiver;
a memory; and
a processor connected to the transceiver and the memory,
wherein the processor is configured to:

receive capability information for an O-RU (open RAN radio unit) from the O-RU;
determine whether to allocate communication resources to the O-RU using a plurality of sub-carrier spacings (SCSs) and allocate a plurality of carriers using different SCSs for the communication resource, based on the capability information;
generate configuration information for the O-RU based on the capability information and information about the allocated plurality of carriers; and
transmit the generated configuration information to the O-RU,
wherein the configuration information includes a center frequency offset for each of the plurality of carriers configured with the different SCSs.

FIG. 1A

110
120
130

FIG. 1B

110
160
170
180
DU
RU

FIG. 2

210
NRT-RIC
200
220
A1
RIC
E2-CP
E2-UP
230
240
O-CU-CP
E1
O-CU-UP
E2-DU
F1
250
F1
F1
F1
O-DU
O-DU
260
FH
FH
O-RU
O-RU
O-RAN BASE STATION

FIG. 3

305
CU
310
DU
315a
315b
DU
FHM
320
330e
RU
325d
325a
325b
325c
RU
RU
RU
330d
RU
325e
RU
325f
330f
330c
330b
330a

FIG. 4

Preamble [8 Bytes]
400
Destination MAC Address [6 Bytes]
410
Source MAC Address [6 Bytes]
420
VLAN Tag [4 Bytes]
430
Type/Length [Ethertype] [2 Bytes]
440
Payload [42...1500 Bytes]
FCS [4 Bytes]
IFG [12 Bytes]

FIG. 5A

500a

| Section Type 1 : DL/UL control msgs | | | | | | | | | |
|---|---|---|---|---|---|---|---|---|---|
| 0 (msb) | 1 | 2 | 3 | 4 | 5 | 6 | 7 (lsb) | # of bytes | |
| transport hesder (501) | | | | | | | Octel 1 | 8 | Octel 1 |
| dataDirection | payloadVersion | | | filterIndex (504) | | | | 1 | Octel 9 |
| frameId (506) | | | | | | | | 1 | Octel 10 |
| subframeId (508) | | | | slotId (510) | | | | 1 | Octel 11 |
| slotId | | startSymbolId (512) | | | | | | 1 | Octel 12 |
| numberOfsections (514) | | | | | | | | 1 | Octel 13 |
| sectionType = 1 (516) | | | | | | | | 1 | Octel 14 |
| udCompHdr (518) | | | | | | | | 1 | Octel 15 |
| reserved | | | | | | | | 1 | Octel 16 |
| sectionId | | | | | | | | 1 | Octel 17 |
| sectionId | | | | rd | symInc | startPrbc | | 1 | Octel 18 |
| startPrbc | | | | | | | | 1 | Octel 19 |
| numPrbc | | | | | | | | 1 | Octel 20 |
| reMask[11:4] | | | | | | | | 1 | Octel 21 |
| reMask[3:0] | | | | numSymbol | | | | 1 | Octel 22 |
| ef=1 (520) | beamId[14:8] | | | | | | | 1 | Octel 23 |
| beamId[7:0] | | | | | | | | 1 | Octel 24 |
| Section Extensions as indicated by "ef" | | | | | | | | var | Octel 25 |
| ... | | | | | | | | | |
| sectionId | | | | | | | | 1 | Octet N |
| sectionId (522) | | | | rb (524) | symInc | startPrbc (526) | | 1 | N+1 |
| startPrbc | | | | | | | | 1 | N+2 |
| numPrbc (528) | | | | | | | | 1 | N+3 |
| reMask[11:4] (530) | | | | | | | | 1 | N+4 |
| reMask[3:0] | | | | numSymbol (532) | | | | 1 | N+5 |
| ef=0 (534) | beamId[14:8] (536) | | | | | | | 1 | N+6 |
| beamId[7:0] (538) | | | | | | | | 1 | N+7 |
| Section Extensions as indicated by "ef" | | | | | | | | var | N+8 |
| NOTE: Shading: yellow is transport header, pink is radio application header, others are repeated sections | | | | | | | | | |

502

Application Header (540)

Section Header (542)

FIG. 5B

500b

| Section Type 3 :PRACH & mixed-numerology | | | | | | | | | |
|---|---|---|---|---|---|---|---|---|---|
| 0 (msb) | 1 | 2 | 3 | 4 | 5 | 6 | 7 (lsb) | # of bytes | |
| transport header | | | | | | | | 8 | Octet 1 |
| dataDirection | payloadVersion | | | filterIndex | | | | 1 | Octet 9 |
| frameId | | | | | | | | 1 | Octet 10 |
| subframeId | | | | slotId | | | | 1 | Octet 11 |
| slotId | | startSymbolId | | | | | | 1 | Octet 12 |
| numberOfsections | | | | | | | | 1 | Octet 13 |
| sectionType = 3 | | | | | | | | 1 | Octet 14 |
| timeOffset (550) | | | | | | | | 1 | Octet 15 |
| frameStructure (552) | | | | | | | | 1 | Octet 17 |
| cpLength (554) | | | | | | | | 1 | Octet 18 |
| udCompHdr (556) | | | | | | | | 1 | Octet 20 |
| sectionId | | | | | | | | 1 | Octet 21 |
| sectionId | | | | rd | symInc | startPrbc | | 1 | Octet 22 |
| startPrbc | | | | | | | | 1 | Octet 23 |
| numPrbc | | | | | | | | 1 | Octet 24 |
| reMask[11:4] | | | | | | | | 1 | Octet 25 |
| reMask[3:0] | | | | numSymbol | | | | 1 | Octet 26 |
| ef | beamId[14:8] | | | | | | | 1 | Octet 27 |
| beamId[7:0] | | | | | | | | 1 | Octet 28 |
| freqOffset | | | | | | | | 1 | Octet 29 |
| reserved (8 bits) | | | | | | | | 1 | Octet 32 |
| Section Extensions as indicated by "ef" | | | | | | | | var | Octet 33 |
| . . . | | | | | | | | | |
| sectionId | | | | | | | | 1 | Octet N |
| sectionId | | | | rb | symInc | startPrbc | | 1 | N+1 |
| startPrbc | | | | | | | | 1 | N+2 |
| numPrbc | | | | | | | | 1 | N+3 |
| reMask[11:4] | | | | | | | | 1 | N+4 |
| reMask[3:0] | | | | numSymbol | | | | 1 | N+5 |
| ef=0 | beamId[14:8] | | | | | | | 1 | N+6 |
| beamId[7:0] | | | | | | | | 1 | N+7 |
| freqOffset | | | | | | | | 3 | N+8 |
| reserved (8 bits) | | | | | | | | 1 | N+11 |
| Section Extensions as indicated by "ef" | | | | | | | | var | N+12 |

FIG. 6

610
620
O-DU (SMO)
O-RU
Retreival of O-RU information
S601
Carrier Decision
Endpoint Configuration Choice
S602
U-plane-configuration
S603

FIG. 7

```
+--ro endpoint-types* [id] ~ 705
| +--ro id                                                uint16
| +--ro supported-section-types* [section-type] ~ 710
| | +--ro section-type                                    uint8
| | +--ro supported-section-extensions*                   uint8
| ...
| +--ro supported-frame-structures* ~ 715                 uint8
| +--ro managed-delay-support?                            enumeration
| +--ro multiple-numerology-supported? ~ 720              boolean
| ...
+--ro endpoint-capacity-sharing-groups* [id] ~ 730
| +--ro id                                                uint16
| ...
| +--ro static-low-level-tx-endpoints* [name]
| +--ro name                                              string
| ...
| +--ro ro endpoint-type?                         -> ../ ../ endpoint-types/id
| +--ro capacity-sharing-groups*                  -> ../ ../ endpoint-capacity-sharing-group/id
| ...
+--ro static-low-level-rx-endpoints* [name]
| +-- ro name                                             string
| ...
| +--ro endpoint-type?                            -> ../ ../ endpoint-types/id
| +--ro capacity-sharing-groups*                  -> ../ ../ endpoint-capacity-sharing-groups/id
| ...
```

FIG. 8

Channel Bandwidth
805
815
GB0
Numerology μ=0
810
825
GB1
Numerology μ=1
GB1
830
820

FIG. 9

```
905a  +--rw low-level-tx-endpoints* [name]
      | +--rw name                         -> /user-plane-configuration/static-low-level-tx-
      endpoints/name
      | ...                                                          uint8
      | +--rw frame-structure? — 910                                 enumeration
      | +--rw cp-type?          )                                    uint16
      | +--rw cp-length         } 915                                uint16
      | +--rw cp-length-other   )                                    int32
      | +--rw offset-to-absolute-frequency-center — 920
      | +--rw number-of-prb-per-scs* [scs] — 925
      | | +--rw  scs — 930
      | | +--rw number-of-prb — 935                                  mcap:scs-config-type
      | +--rw e-axcid — 940                                          uint16
      | | +--...
      | | +--rw eaxc-id
      | ...                                                          uint16
905b  +--rw low-level-rx-endpoints* [name]
      | +--rw name ->                      /user-plane-configuration/static-low-level-rx-endpoints/name
      | ...
      | +--rw frame-structure?                                       uint8
      | +--rw cp-type?                                               enumeration
      | +--rw cp-length                                              uint16
      | +--rw cp-length-other                                        uint16
      | +--rw offset-to-absolute-frequency-center                    int32
      | +--rw number-of-prb-per-scs* [scs]
      | | +--rw  scs                                                 mcap:scs-config-type
      | | +--rw number-of-prb                                        uint16
      | +--...
      | +--rw e-axcid
      | | +--...
      | | +--rw eaxc-id                                              uint16
      | ...
950a  +--rw tx-array-carriers* [name]
      | +--rw name                                                   string
      | ...
      | x--rw absolute-frequency-center?                             uint32
      | +--rw center-of-channel-bandwidth — 960                      uint64
      | +--rw cannel-bandwidth — 965                                 uint64
      | ...
950b  +--rw rx-array-carriers* [name]
      | +--rw name                                                   string
      | ...
      | x--rw absolute-frequency-center?                             uint32
      | +--rw center-of-channel-bandwidth                            uint64
      | +--rw cannel-bandwidth                                       uint64
      | ...
```

FIG. 10
1050
offset-to-absolute-frequency-center*1/2*15kHz = offset frequency
1005
(-24.3MHz = -3240*7.5kHz)
Center-of-channel-bandwidth
1035
OS1
OS2
1040
F0
1030
1020
SCS 15kHz (270 PRB)
SCS 30kHz (133 PRB)
1025
The whole carrier
1010
1015
50 MHz

FIG. 11

```
1105a   +--rw low-level-tx-endpoints  [name]
        | +--rw name                       -> /user-plane-configuration/static-low-level-tx-
        endpoints/name
        | ...
        | +--rw frame-structure?—1110                                       uint8
        | +--rw cp-type?          ┐                                         enumeration
        | +--rw cp-length         }115                                      uint16
        | +--rw cp-length-other   ┘                                         uint16
        | +--rw offset-to-absolute-frequency-center —1120                   int32
        | +--rw number-of-prb-per-scs* [scs] —1125
        | | +--rw  scs—1130                                                 mcap:scs-config-type
        | | +--rw number-of-prb—1135                                        uint16
        | | +--rw offset-to-absolute-frequency-center-per-scs —1170         int32
        | +--rw e-axcid —1140
        | | +--...
        | | +--rw eaxc-id                                                   uint16
        | ...
1105b   +--rw low-level-rx-endpoints* [name]
        | +--rw name ->                    /user-plane-configuration/static-low-level-rx-endpoints/name
        | ...
        | +--rw frame-structure?                                            uint8
        | +--rw cp-type?                                                    enumeration
        | +--rw cp-length                                                   uint16
        | +--rw cp-length-other                                             uint16
        | +--rw offset-to-absolute-frequency-center                         int32
        | +--rw number-of-prb-per-scs* [scs]
        | | +--rw  scs                                                      mcap:scs-config-type
        | | +--rw number-of-prb                                             uint16
        | | +--rw offset-to-absolute-frequency-center-per-scs               int32
        | +--...
        | +--rw e-axcid
        | | +--...
        | | +--rw eaxc-id                                                   uint16
        | ...
1150a —+--rw tx-array-carriers* [name]
        | +--rw name                                                        string
        | ...
        | x--rw absolute-frequency-center?                                  uint32
        | +--rw centrer-of-channel-bandwidth                                uint64
        | +--rw channel-bandwidth                                           uint64
        | ...
1150b —+--rw rx-array-carriers* [name]                                      string
        | +--rw name
        | ...
        | x--rw absolute-frequency-center?                                  uint32
        | +--rw center-of-channel-bandwidth                                 uint64
        | +--rw channel-bandwidth                                           uint64
```

FIG. 12A

1250
offset-to-absolute-frequency-center-per-scs-1*1/2*15kHz = offset frequency-1 (-24.3MHz = -3240*7.5kHz)
1205
1245
offset-to-absolute-frequency-center-per-scs-2*1/2*30kHz = offset frequency-2 (-23.94MHz = -1596*15kHz)
1207
Center-of-channel-bandwidth
1240
1235
$OS_1$ $OS_2$
$F_0$
1230
1220
SCS 15kHz (270 PRB)
SCS 30kHz (133 PRB)
1225
The whole carrier
1210
1215
50 MHz

FIG. 12B

1255
offset-to-absolute-frequency-center-per-scs-3*1/2*15kHz = offset frequency-3
1299
5.94MHz = 792*7.5kHz
Center-of-channel-bandwidth
1257
offset-to-absolute-frequency-center-per-scs-4*1/2*30kHz = offset frequency-4
-48.96MHz = -3264*15kHz
1295
1260
1270
SCS 15kHz (240 PRB)
$OS_3$
1285
$F_0$
1280
1275
SCS 30kHz (152 PRB)
1290
$OS_4$
The whole carrier
1265
100 MHz

FIG. 13

1300
O-DU
1320
1310
1330
TRANSCEIVER
PROCESSOR
MEMORY

FIG. 14

1400
O-RU
1420
1410
1430
TRANSCEIVER
PROCESSOR
MEMORY

FIG. 15

1500
CONTROLLER
1520
1510
1530
TRANSCEIVER
PROCESSOR
MEMORY

FIG. 16

START
RECEIVE CAPABILITY INFORMATION FOR O-RU
S1610
DETERMINE WHETHER TO ALLOCATE COMMUNICATION RESOURCES USING A PLURALITY OF SCSs AND ALLOCATE A PLURALITY OF CARRIERS USING DIFFERENT SCSs BASED ON THE CAPABILITY INFORMATION
S1620
GENERATE CONFIGURATION INFORMATION FOR THE O-RU BASED ON THE CAPABILITY INFORMATION AND INFORMATION FOR THE PLURALITY OF CARRIERS
S1630
TRANSMIT CONFIGURATION INFORMATION TO THE O-RU
S1640
END

## INTERNATIONAL SEARCH REPORT

International application No.
**PCT/KR2024/015435**

**A. CLASSIFICATION OF SUBJECT MATTER**

**H04L 27/26**(2006.01)i

According to International Patent Classification (IPC) or to both national classification and IPC

**B. FIELDS SEARCHED**

Minimum documentation searched (classification system followed by classification symbols)

H04L 27/26(2006.01); H04L 41/0866(2022.01); H04L 43/062(2022.01); H04W 24/02(2009.01); H04W 28/02(2009.01); H04W 56/00(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: O-DU(open RAN distributed unit), O-RU(open RAN radio unit), 능력(capability), 혼합 뉴머럴로지(mixed numerology), 서브 캐리어 스페이싱(sub-carrier spacing: SCS), 자원 할당(resource allocation), 설정(configuration)

**C. DOCUMENTS CONSIDERED TO BE RELEVANT**

| Category* | Citation of document, with indication, where appropriate, of the relevant passages | Relevant to claim No. |
|---|---|---|
| X | KR 10-2022-0037305 A (SAMSUNG ELECTRONICS CO., LTD.) 24 March 2022 (2022-03-24) See paragraphs [0036]-[0037], [0216], [0225]-[0226], [0243], [0249] and [0255]; claims 1-3 and 6; and figures 5-6d. | 6-7,10 |
| Y | | 1-5,8-9,11 |
| Y | US 2022-0417097 A1 (NEC CORPORATION) 29 December 2022 (2022-12-29) See paragraphs [0051], [0074] and [0080]. | 1-5,8-9,11 |
| A | US 2022-0408390 A1 (NTT DOCOMO, INC.) 22 December 2022 (2022-12-22) See paragraphs [0083]-[0088]; and figure 7. | 1-11 |
| A | CN 115175215 A (SICHUAN INNOGENCE TECHNOLOGY CO., LTD.) 11 October 2022 (2022-10-11) See claims 1-10. | 1-11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 January 2025** | **22 January 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2024/015435

C. DOCUMENTS CONSIDERED TO BE RELEVANT

| Category* | Citation of document, with indication, where appropriate, of the relevant passages | Relevant to claim No. |
|---|---|---|
| A | WO 2023-060822 A1 (SANECHIPS TECHNOLOGY CO., LTD.) 20 April 2023 (2023-04-20) See claims 1-12. | 1-11 |

Form PCT/ISA/210 (second sheet) (July 2022)

**INTERNATIONAL SEARCH REPORT**
**Information on patent family members**

International application No.
**PCT/KR2024/015435**

| Patent document cited in search report | Publication date (day/month/year) | Patent family member(s) | Publication date (day/month/year) |
|---|---|---|---|
| KR 10-2022-0037305 A | 24 March 2022 | AU 2021-343338 A1 | 24 March 2022 |
| | | AU 2021-343338 A9 | 24 March 2022 |
| | | CN 116158166 A | 23 May 2023 |
| | | EP 4203588 A1 | 28 June 2023 |
| | | JP 2023-542177 A | 05 October 2023 |
| | | US 2023-0224118 A1 | 13 July 2023 |
| | | WO 2022-060180 A1 | 24 March 2022 |
| US 2022-0417097 A1 | 29 December 2022 | CN 115280736 A | 01 November 2022 |
| | | EP 4007350 A1 | 01 June 2022 |
| | | JP 7287569 B2 | 06 June 2023 |
| | | US 12015523 B2 | 18 June 2024 |
| | | WO 2021-181910 A1 | 16 September 2021 |
| US 2022-0408390 A1 | 22 December 2022 | CN 114731595 A | 08 July 2022 |
| | | CN 114731595 B | 10 September 2024 |
| | | EP 4057710 A1 | 14 September 2022 |
| | | EP 4057710 A4 | 12 July 2023 |
| | | JP 7407833 B2 | 04 January 2024 |
| | | WO 2021-090444 A1 | 14 May 2021 |
| CN 115175215 A | 11 October 2022 | CN 115175215 B | 01 October 2024 |
| WO 2023-060822 A1 | 20 April 2023 | CN 115988651 A | 18 April 2023 |
| | | EP 4418783 A1 | 21 August 2024 |
| | | JP 2024-533784 A | 12 September 2024 |
| | | KR 10-2024-0053072 A | 23 April 2024 |
| | | US 2024-0397486 A1 | 28 November 2024 |

Form PCT/ISA/210 (patent family annex) (July 2022)